# EUROPEAN PATENT APPLICATION

(11) **EP 1 972 909 A1**
(43) Date of publication of application: **24.09.2008**
(21) Application number: 07104743.5
(22) Date of filing: 23.03.2007
(51) Int. Cl.: G01J 1/02, G01N 21/21, G02B 5/30, B01L 3/00, G01J 1/58

(54) **Luminescence sensor**

(71) Applicant: Koninklijke Philips Electronics N.V., 5621 BA Eindhoven (NL)
(72) Inventor: The designation of the inventor has not yet been filed
(74) Representative: Van Velzen, Maaike Mathilde

(57) **Abstract**

The present invention provides a luminescence sensor (20) comprising an optical polarization-based filter formed by at least a first conductive grating, e.g. wire grid (11), having a plurality of grating elements, e.g. wires (12). At least one wire (12) of the conductive grating (11) is adapted for furthermore functioning as a temperature control electrode, e.g. a heater or temperature sensor. The luminescence sensor (20) according to the invention thus comprises a conductive grating which functions as both polarization-based filter and temperature control electrode. The present invention furthermore provides a method for manufacturing such a luminescence sensor (20) and a method for detecting luminescence radiation using such luminescence sensor (20).

## Description

### FIELD OF THE INVENTION

The present invention relates to luminescence sensors, for example luminescence biosensors or luminescence chemical sensors, to a method for manufacturing such luminescence sensors and to a method for detection of luminescence radiation generated by one or more luminophores present in a sample fluid while simultaneously heating and/or determining the temperature of the sample fluid using such a luminescence sensor.

### BACKGROUND OF THE INVENTION

Luminescence, e.g. fluorescence, analysis is one of the most widely used techniques in the fields of biochemistry and molecular bio-physics. Luminescence, e.g. fluorescence, detection methods are very attractive because many of the current biochemistry protocols already incorporate luminescent, e.g. fluorescent, labels. Therefore, chip-based assays can easily be incorporated into existing protocols without changing the biochemistry. Luminescence, e.g. fluorescence, detection can be used in a variety of applications on an analysis chip, such as the fluorescent detection of optical beacons during DNA amplification, of labelled proteins, of stained cells and of immobilized or hybridized (labelled) nucleic acids on a surface. Reactions such as Sanger sequencing and the polymerase chain reaction (PCR) have been adapted to be used with luminescent labelling methods.

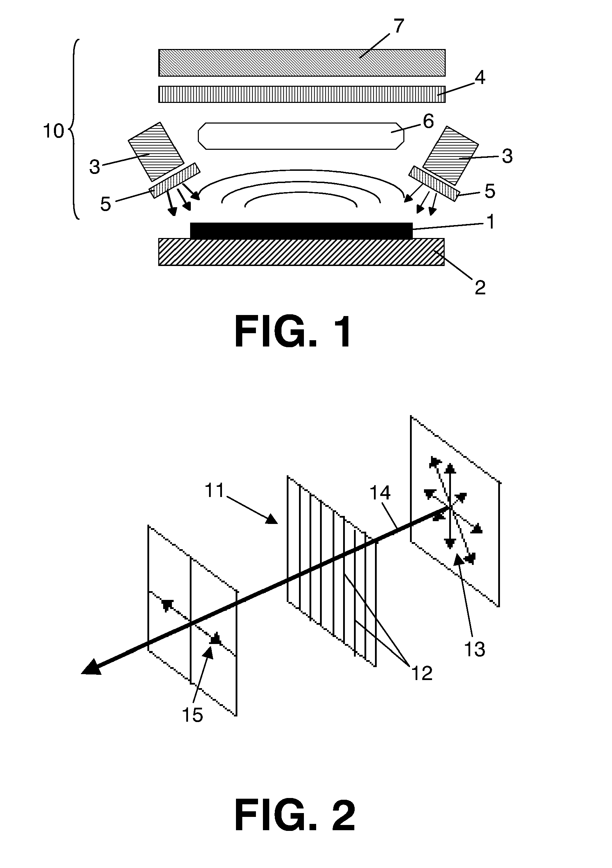

Generally, as illustrated in Fig. 1, detection of luminescence signals originating from a luminescent sample 1 provided on a carrier 2 of a biochip may be done using an optical detection system 10, which is illustrated in Fig. 1 and which may comprise a light source 3, spectral optical filters, such as a luminescence filter 4 and excitation filters 5, and optical sensors such as e.g. CCD camera 7, localized in a bench-top/laboratory machine to quantify the amount of luminophores present. The optical detection system 10 may furthermore comprise a lens 6 in between the luminescent sample 1 and the luminescence filter 4.

Such optical detection systems 10 used in bench-top/laboratory machines generally require expensive optical components to acquire and analyse luminescence signals. In particular, expensive optical filters with sharp wavelength cut-off (i.e. highly selective filters) are used to obtain the required sensitivity of these optical systems, as often the shift (so called Stokes shift) between the excitation spectrum (absorption) and the emission spectrum (luminescence) is small (< 50 nm). In addition, the luminescence intensity may typically be in the order of 10⁶ lower than the excitation intensity. Consequently, a main source of background signal in a luminescence-based optical system is caused by detecting part of the excitation light.

In biotechnology applications, temperature control may be of vital importance where controlled heating provides functional capabilities, such as mixing, dissolution of solid reagents, thermal denaturation of proteins and nucleic acids, enhanced diffusion rates of molecules in the sample, and modification of surface binding coefficients. A number of reactions, including DNA amplification techniques, ligand binding, enzymatic reactions, extension, transcription and hybridization reactions are generally carried out at optimized, controlled temperatures. Furthermore, temperature control is essential to operate pumps and reversible or irreversible valves that are thermally actuated.

A prime example of a biochemical process, that requires reproducible and accurate temperature control, is high efficiency thermal cycling for DNA amplification using PCR (polymerase chain reaction). PCR is a temperature controlled and enzyme-mediated amplification technique for nucleic acid molecules, usually consisting of periodical repetition of three reaction steps: a denaturing step at 92-96 °C, an annealing step at 37-65 °C and an extending step at ~72 °C. PCR can produce millions of identical copies of a specific DNA target sequence within a short time, and thus has become a routinely used procedure in many diagnostic, environmental, and forensic laboratories to identify and detect a specific gene sequence. Rapid heat transfer is crucial for an efficient PCR to take place, and this makes temperature control an essential feature in a PCR system.

However, the detection sensitivity in real-time PCR is largely determined by the luminescent signal to excitation background ratio. In order to have a high detection sensitivity, the background signal, pre-dominantly caused by part of the incident excitation light that reaches the detector, should be suppressed as much as possible. Furthermore, as processes like PCR often require reproducible and accurate temperature control, the devices in which these processes are performed require the presence of controllable heating means such as e.g. resistors or the like. This increases the cost of such devices because it requires additional components to be added to the device and hence requires additional processing steps.

### BRIEF SUMMARY OF THE INVENTION

It is an object of the present invention to provide a good luminescence sensor, a good method for manufacturing such luminescence sensors and a method for the detection of luminescence radiation generated by one or more luminophores present in a sample fluid while simultaneously heating and/or determining the temperature of the sample fluid.

The above objective is accomplished by a method and device according to the present invention.

In a first aspect, the present invention provides a luminescence sensor comprising at least one optical polarization-based filter formed by at least a first conductive grating, e.g. a wire grid. The at least first conductive grating comprises a plurality of wires. The sensor is adapted for use with a temperature control device. According to the present invention, at least one of the wires of the at least first conductive grating is adapted for use with the temperature control device. A luminescence sensor according to embodiments of the present invention is low-cost because both temperature control electrodes and high-quality optical filters are combined in the conductive grating. Both can be provided in a single simple process. Furthermore, a conductive grating, e.g. a wire grid, can provide uniform heating which allows obtaining a high temperature uniformity in a sample, for example in real time-PCR. Also a possibility for local heating of a reaction chamber is generated.

A luminescence sensor according to embodiments of the present invention may furthermore comprise at least a second optical polarization-based filter formed by at least a second conductive grating. Such embodiments allow suppression of the incident radiation on the detector, while allowing at least part of the luminescent radiation to reach the detector. In such luminescence sensor, the first conductive grating may have a first type of polarization transmission and the second conductive grating may have a second type of polarization transmission, the first and second type of polarization transmission being different from each other. This way, the at least two conductive gratings for a crossed-polariser integrated in the luminescence sensor, allowing good suppression of a background signal while allowing the luminescent radiation to reach the detector.

The second conductive grating may comprise a plurality of wires. At least one wire of the second conductive grating may be adapted for functioning as a temperature control electrode. This allows improved local heating with respect to when only the at least first conductive grating is present.

A luminescence sensor according to embodiments of the present invention may comprise a reaction chamber having a first side formed by a surface of a substrate, and at least one conductive grating may be formed on the first side of the reaction chamber.

A luminescence sensor according to embodiments of the present invention may comprise a reaction chamber having a second side formed by a lid located spaced from a substrate and substantially parallel to the substrate. At least one conductive grating may then be formed on the second side of the reaction chamber.

A luminescence sensor according to embodiments of the present invention may furthermore comprise a detector for detecting luminescent radiation. The luminescent radiation may be generated by luminophores present in the reaction chamber of the luminescence sensor upon irradiation with excitation radiation.

The detector may be external to the luminescence sensor, i.e. the detector may be a non-integrated detector. The detector may be located at the same side of the luminescence sensor where excitation radiation enters the luminescence sensor.
Alternatively, the detector may be located at a first side of the luminescence sensor and excitation radiation may enter the luminescence sensor at a second side thereof, i.e. an excitation radiation source is located at a second side thereof, the first and second side being opposite to each other with respect to the reaction chamber.

In embodiments of the present invention, a luminescence sensor may furthermore comprise a detector filter in between the luminescence sensor and the detector. This prevents incident excitation radiation from reaching the detector.

In alternative embodiments according to embodiments of the present invention, the detector may be integrated in the luminescence sensor. This is advantageous as the intensity of the detected luminescence radiation can be enhanced. Furthermore, costs can be reduced. This embodiment is advantageous in particular for portable hand-held sensors, as on-chip detection of luminescence radiation improves both the speed and reliability of detection.

A luminescence sensor according to embodiments of the present invention may furthermore comprise driving means for driving the at least one wire of the at least one conductive grating which is adapted for functioning with the temperature control device. The driving means may be a current source or voltage source.

In a luminescence sensor according to embodiments of the present invention, the at least one wire may be part of a heater.

In a luminescence sensor according to embodiments of the present invention the at least one wire may be part of a temperature sensor.

A luminescence sensor according to embodiments of the present invention may comprise a plurality of first conductive gratings, wherein the plurality of first conductive gratings may be logically arranged in rows and columns. The terms "column" and "row" are used to describe sets of array elements which are linked together. The linking can be in the form of a Cartesian array of rows and columns, however, the present invention is not limited thereto. As will be understood by those skilled in the art, columns and rows can be easily interchanged and it is intended in this disclosure that these terms be interchangeable. Also, non-Cartesian arrays may be constructed and are included within the scope of the invention. Accordingly the terms "row" and "column" should be interpreted widely. To facilitate in this wide interpretation, reference is made herein to "logically organised rows and columns". By this is meant that sets of conductive gratings are linked together in a topologically linear intersecting manner; however, that the physical or topographical arrangement need not be so. The plurality of conductive gratings may be arranged in the form of an array. According to embodiments of the present invention, the rows and columns may be arranged in a matrix which forms a thermal processing array.

The luminescence sensor may furthermore comprise a row select driver and a column select driver for addressing a conductive grating in the matrix.

According to embodiments of the present invention, one or more of the above conductive gratings may be a wire grid.

A luminescence sensor according to embodiments of the present invention may furthermore comprise active switching elements such as e.g. thin film transistors (TFTs), diodes, MIM diodes, preferably using large area electronics technologies such as e.g. a-Si, LTPS, organic TFTs etc. These active switching elements may be used for directing electrical control signals or actuation signals (e.g. heating currents), or to act as current sources (see further).

A luminescence sensor according to embodiments of the present invention may be a luminescence biosensor, for example a fluorescence biosensor.

In a second aspect, the present invention provides a method for manufacturing a luminescence sensor for the detection of luminescence radiation generated by at least one luminophore and for use with a temperature control device. The method comprises providing at least a first conductive grating as at least one optical polarization-based filter, the conductive grating comprising a plurality of wires, and providing at least one of the wires of the at least first conductive grating for use with the temperature control device. The manufacturing method is low-cost because both temperature control electrodes and high-quality optical filters are combined and can be provided in a single simple process.

A method according to embodiments of the present invention may furthermore comprise providing at least a second optical polarization-based filter by providing at least a second conductive grating.

The at least first and/or the at least second conductive grating may be wire grids.

In a method according to embodiments of the present invention, providing at least a first conductive grating may be performed by providing a conductive grating showing a first type of polarization transmission, and providing at least a second conductive grating may be performed by providing a conductive grating showing a second type of polarization transmission, the first and second type of polarization transmission being different from each other. The at least two conductive gratings, e.g. wire grids, thus form a crossed-polarizer integrated in the luminescence sensor. This provides good suppression of a background signal while allowing the luminescent radiation to reach a detector.

A method according to embodiments of the present invention may furthermore comprise providing a detector for detecting luminescence radiation. Such providing a detector may be performed by providing a detector in a substrate of the luminescence sensor. This way, the intensity of the detected luminescence radiation can be enhanced. Furthermore, costs can be reduced, as no separate detector needs to be provided. This embodiment is advantageous for portable hand-held sensors, as on-chip detection of luminescence radiation improves both the speed and reliability of detection.

In a method according to embodiments of the present invention, providing at least a first conductive grating may be performed by providing a plurality of conductive gratings logically arranged in rows and columns. The terms "column" and "row" are used to describe sets of array elements which are linked together. The linking can be in the form of a Cartesian array of rows and columns, however, the present invention is not limited thereto. As will be understood by those skilled in the art, columns and rows can be easily interchanged and it is intended in this disclosure that these terms be interchangeable. Also, non-Cartesian arrays may be constructed and are included within the scope of the invention. Accordingly the terms "row" and "column" should be interpreted widely. To facilitate in this wide interpretation, reference is made herein to "logically organised rows and columns". By this is meant that sets of conductive gratings are linked together in a topologically linear intersecting manner; however, that the physical or topographical arrangement need not be so. According to embodiments of the present invention, the rows and columns may be arranged in a matrix which forms a thermal processing array.

In a third aspect, the present invention provides a method for detecting luminescence radiation emitted by luminophores in a sample fluid while simultaneously heating the sample fluid. The method comprises irradiating the luminophores with excitation radiation, using at least one optical polarization-based filter formed by at least a first conductive grating for selectively transmitting luminescence radiation of a particular type, the first conductive grating comprising a plurality of wires, and driving the at least one wire of the at least first conductive grating for at least locally heating the sample fluid, and detecting luminescence radiation. In embodiments of the present invention, the detected luminescence radiation may be luminescence which is transmitted by the conductive grating. In alternative embodiments of the present invention, the detected luminescence radiation may be luminescence which is reflected by the conductive grating, combined with luminescence which is directly emanating from the luminophores. It is an advantage of this aspect of the present invention that no additional external heating means are required. A uniform heating is possible.

In a method according to embodiments of the third aspect of the present invention, all wires of the conductive grating may be driven simultaneously, wherein driving of the wires may be performed by flowing current through the wires. Alternatively, driving of the wires may be performed by placing one end of the wires on a pre-determined potential.

In a method according to embodiments of the third aspect of the present invention, all wires of the conductive grating may be drivable, wherein the wires are driven in segments one after the other.

A method according to embodiments of the present invention may furthermore comprise determining a change in temperature of the sample fluid by measuring a voltage over the at least one wire of the conductive grating, from the current sent through the at least one wire and the voltage measured over the at least one wire determining a change in resistivity of the at least one wire, and from the change in resistivity of the at least one wire determining a change in temperature of the sample fluid.

In a further aspect, the present invention provides a method for detecting luminescence radiation emitted by luminophores in a sample fluid while simultaneously monitoring a change in temperature of the sample fluid. The method comprises irradiating the luminophores with excitation radiation, determining a change in resistivity of at least one wire of at least a first conductive grating of an optical polarization-based filter, from the change in resistivity determining the change in temperature of the sample fluid, and detecting the luminescence radiation.

Determining a change in resistivity may comprise driving the at least one wire of the at least first conductive grating by sending current through the at least one wire, measuring a change in voltage over the at least one wire, from the current sent through the at least one wire and the voltage measured over the at least one wire determining a change in resistivity of the at least one wire.

In a method for detecting luminescence radiation emitted by luminophores in a sample fluid while simultaneously monitoring a change in temperature of the sample fluid according to embodiments of the present invention, the conductive grating may comprise a plurality of wires, all wires of the conductive grating being driven simultaneously, wherein driving of the wires may be performed by sending current through the wires.

In alternative embodiments of a method for detecting luminescence radiation emitted by luminophores in a sample fluid while simultaneously monitoring a change in temperature of the sample fluid according to embodiments of the present invention, all wires of the conductive grating may be driven in segments one after the other.

In a further aspect, the present invention provides a controller for controlled driving of at least one wire of a conductive grating in a luminescence sensor. The controller comprises a control unit for controlling at least one current source for flowing of a current through at least one wire of the conductive grating.

The present invention also provides a computer program product for performing, when executed on a computing means, a method of any of the method embodiments of the present invention.

The present invention furthermore provides a machine readable data storage device for storing the computer program product of the present invention.

The present invention also provides transmission of the computer program product of the present invention over a local or wide area telecommunications network.

It is an advantage of a luminescence sensor according to embodiments of the present invention that it combines polarization based filters and a temperature control electrode in one, hereby reducing costs for the manufacturing of such sensors.

It is a further advantage of a luminescence sensor according to embodiments of the present invention that it can provide uniform heating of a sample fluid present in a reaction chamber of the sensor.

It is yet another advantage of a luminescence sensor according to embodiments of the present invention that local heating can be provided.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### BRIEF DESCRIPTION OF THE DRAWINGS

Fig. 1 schematically illustrates an optical set-up for detecting luminescence signals.
Fig. 2 is a schematic illustration of a wire grid polarizer.
Fig. 3 to Fig. 8 illustrate luminescence sensors according to embodiments of the present invention.
Fig. 9 schematically illustrates the use of wire grids as thermal control electrodes according to different embodiments of the present invention.
Fig. 10 to Fig. 12 illustrate luminescence sensors according to embodiments of the present invention.
Fig. 13 schematically illustrates addressing of a wire grid heater according to an embodiment of the present invention.
Fig. 14 illustrates an active matrix principle based thermal processing array comprising wire grids according to embodiments of the present invention.
Fig. 15 illustrates one cell of an active matrix principle based thermal processing array comprising a wire grid according to embodiments of the present invention.
Fig. 16 illustrates fluorescence signal versus cycle number for a quantitative real-time PCR experiment.
Fig. 17 schematically illustrates a system controller for use with a luminescence sensor according to embodiments of the present invention.
Fig. 18 is a schematic representation of a processing system as can be used for performing methods according to embodiments of the present invention.

In the different figures, the same reference signs refer to the same or analogous elements.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, above, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect of the present invention a luminescence sensor is provided. The present invention provides a qualitative or quantitative sensor which shows a good signal-to-background ratio. The sensor is more particularly a luminescence sensor, which may for example be a luminescence biosensor, such as e.g. a fluorescence biosensor, or a luminescence chemical sensor. The present invention also provides a method for manufacturing such a luminescence sensor and a method for the detection of luminescence radiation generated by at least one luminophore using such a luminescence sensor.

A luminescence sensor according to embodiments of the present invention comprises at least one optical polarization-based filter. This may be formed by at least a first conductive grating, e.g. a wire grid. The at least first conductive grating, e.g. wire grid, comprises a plurality of wires. The wires may be, but do not need to be, located in a regular array, placed in a plane perpendicular to an incident beam. According to an embodiment of the present invention, at least one of the wires of the at least first conductive grating, e.g. wire grid, is adapted to furthermore function as an electrode used in temperature control, such as e.g. a part of a heater or a temperature sensor.

Hence, at least one conductive grating, e.g. wire grid, is incorporated in a luminescence sensor according to embodiments of the present invention. The luminescence sensor may preferably be a microfluidic device and may most preferably be a microfluidic device which may be used in RT-PCR (real-time polymerase chain reaction) processes. According to embodiments of the present invention, the at least one conductive grating, e.g. wire grid, functions both as a polarization-based filter and as an electrode in temperature control or measurement (e.g. as part of a heater, or a temperature sensor). The conductive grating comprises an array of a plurality of parallel wires with at least one aperture. One in-plane dimension of the aperture is below the diffraction limit in the medium that fills the aperture, and the other in-plane dimension is above the diffraction limit in the medium that fills the aperture. The array may be, but does not need to be, a periodic array. The wires of the conductive grating are made of conductive materials in order to allow them to function as optical polarizer and optionally as thermal control element. Preferably, the imaginary part of the refractive index of the material of the wires should be sufficiently large, typically larger than 1. Suitable materials for the wires are for example Al, Au, Ag, Cr. The wires may be made or formed by any suitable method, for example by thin film processing techniques, including printing of patterned metal structures or patterning a sputtered metal coating.

Fig. 2 schematically illustrates the principle of a polarizer based on a conductive grating, such as a wire grid 11 used as a polarizer. The further description will be done referring to a wire grid, but the invention is not limited thereto. In case of a wire grid as in the example illustrated, the wire grid 11 comprises a plurality of parallel wires 12 in a regular array. Wire grids 11 have a polarisation dependent suppression. The performance of a wire grid polarizer is determined by the center-to-center spacing or period of the wires 12 and the wavelength of the incident radiation. If the spacing or period between the wires 12 of the wire grid 11 is much shorter than the wavelength of the incident radiation, the wire grid 11 functions as a polarizer that reflects electromagnetic radiation polarized parallel to the wires 12 and transmits radiation of the orthogonal polarization. In general, when unpolarized radiation (indicated with reference number 13 in Fig. 2) is incident onto the wire grid 11 (as indicated by arrow 14), the wire grid 11 will reflect radiation with an electric field vector parallel to the wires 12 of the wire grid 11 (not shown in Fig. 2) and will transmit radiation with an electric field vector perpendicular to the wires 12 of the wire grid 11 (indicated by reference number 15). Ideally, the wire grid polarizer will function as a perfect mirror for radiation of a first type of polarization, such as e.g. s-polarized radiation, and will be perfectly transparent for radiation of a second type of polarization, such as p-polarized radiation. However, in reality, even wires 12 formed of the most reflective metals may absorb some fraction of the incident radiation and may reflect only 90% to 95% of the impinging light of the first type. Also a substrate on which the wire grid 11 is formed may not transmit the full fraction of the incident radiation. Even when such substrate is, for example, made from plain glass, it does not transmit a full 100% of the incident radiation, for example due to surface reflections.

However, in the description of the invention hereinafter, for the ease of explanation these reflections and/or absorptions described above will not be taken into specifically mentioned and they are not considered to alter the nature of the invention.

The use of wire grids functioning both as a polarization-based filter and as electrodes to be used in temperature control (e.g. as heaters, temperature sensors) allows optical detection of a luminescent, e.g. fluorescent, signal emerging from a sample fluid in a reaction chamber of a luminescence sensor, e.g. emanating from luminescent, e.g. fluorescent, labels or probes, whilst suppressing the optical background signal caused by the incident excitation light. In the further description, the luminescent, e.g. fluorescent, labels or probes will be referred to as luminophores, e.g. fluorophores.

In most practical cases, e.g. in a fluid, the luminescence radiation generated by luminophores excited by excitation radiation, e.g. excitation light, can be assumed to be independent of the polarization of the excitation radiation. It can be assumed to be random, i.e. comprising 50% p-polarized and 50% s-polarized luminescent radiation.

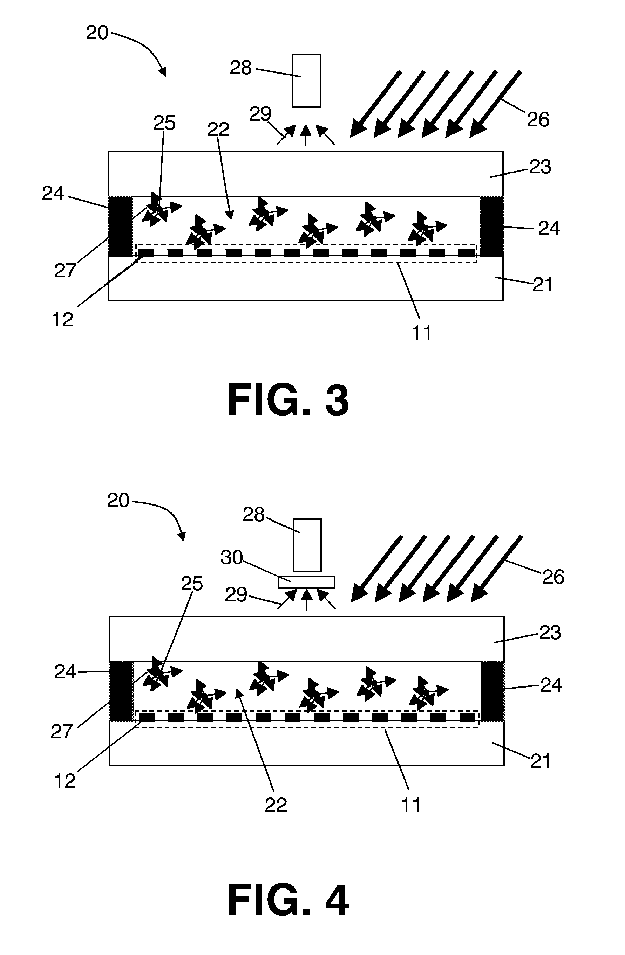

According to a first embodiment of the present invention, of which different examples are illustrated in Fig. 3 to 8, the luminescence sensor 20 may comprise a substrate 21 on top of which a conductive grating, e.g. wire grid 11 comprising a plurality of parallel wires 12, may be located. The wires 12 may be located in a regular pattern, with a separation distance between the wires 12 of less than half the wavelength of the radiation in the medium that fills the space between the wires, typically between 50 nm and 150 nm, for example 100 nm. Separation distance refers to the open space between the wires and not to the period of the wires. The wires 12 of the wire grid 11 may be formed of any suitable conductive material (with typical an imaginary refractive index larger than 1) known by a person skilled in the art, preferably a metal, such as e.g. gold, Pt, aluminium, copper, silver or the like. The wires 12 may have a width of 25 nm or larger, more preferably of 50 nm or larger and most preferably between 50 nm and 150 nm. Too small width of the wires deteriorates the performance of the conductive grating, e.g. wire grid. The wires should be sufficiently wide in order to act as a polarizer with a substantial extinction ratio (ratio between transmission for p and s polarized light). Preferably the wire width is twice the separation distance between the wires. The wire grid 11 functions as an optical polarization-based filter as explained above. The type of polarization transmission of the wire grid 11 may be chosen depending on the application. For example, the wire grid 11 may be formed such that it transmits p-polarized radiation and reflects s-polarised radiation or vice versa.

The luminescence sensor 20 may furthermore comprise a reaction chamber 22 having a first side formed by a surface of the substrate 21 lying in a first plane, a second side formed by a surface of a lid 23 located above the substrate 21 and lying in a second plane substantially parallel to the first plane and side walls 24 located in between the substrate 21 and the lid 23 and lying in third planes substantially perpendicular to the first and second plane. Any suitable combination of substances may be used to obtain a luminescent signal. In the following a specific combination will be described but this is by way of example only.

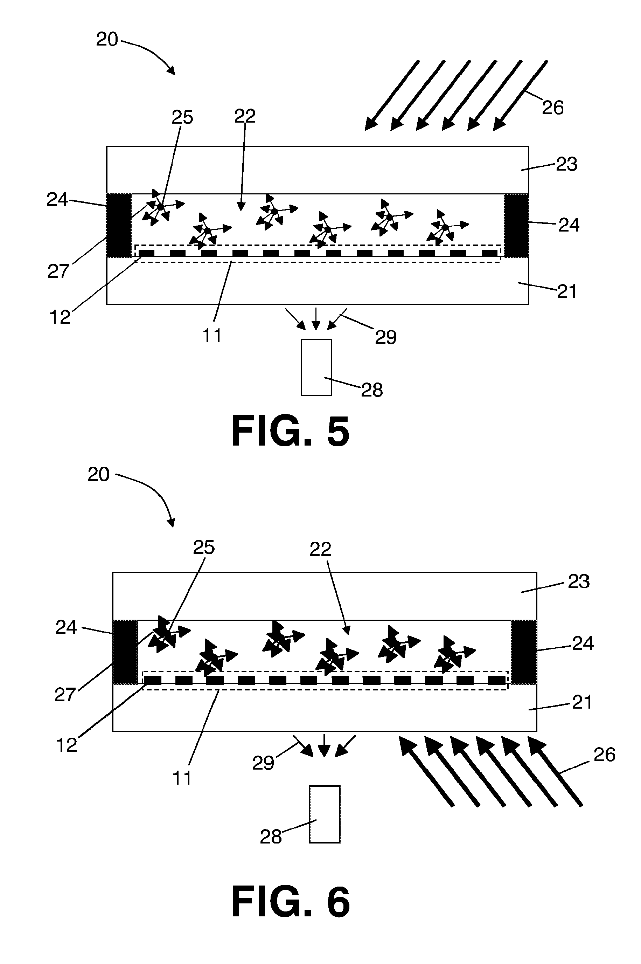

A sample fluid comprising a substance such as luminophores 25, e.g. fluorophores, may be provided in the reaction chamber 22. The substance, such as luminophores 25, e.g. fluorophores, may then bind to e.g. target moieties in the sample fluid that have to be detected. For the purpose of simplification and illustration of the principle of the luminescence sensor 20 according to embodiments of the invention, in the figures only the luminophores 25, e.g. fluorophores, and not the target moieties are illustrated. Irradiation of the luminophores 25 with excitation radiation (indicated by arrows 26) excites the luminophores 25, which then produce luminescence, e.g. fluorescence, radiation. The incident excitation radiation 26 may be polarized (p- or s- polarized) or may be unpolarized (comprising both p and s polarization). According to embodiments of the invention, irradiation of the sample fluid may be performed through the lid 23 (see Fig. 3 to 5) or may be performed through the substrate 21 (see Fig. 6 to 8). Luminescence, e.g. fluorescence, radiation (indicated with arrows 27) coming from the luminophores 25, e.g. fluorophores, may then be detected by a radiation detector 28 such as an optical detector. The detector 28 may, according to embodiments of the invention, be located at that side of the luminescence sensor 20 from which the sensor 20 is irradiated (see Figs. 3, 4, 6 and 7). According to other embodiments, the detector 28 may be located at a side of the luminescence sensor 20 opposite to the side from which the sensor 20 is irradiated (see Fig. 5, 8, 10). According to embodiments of the invention, the detector 28 may be a CCD detector, but it may also be any other detector suitable for detecting luminescent, e.g. fluorescent, radiation 27.

Besides the function of the wire grid 11 as an optical polarization-based filter, according to the present invention at least one of the wires 12 of the wire grid 11 also functions as an electrode for use in temperature control or measurement. According to embodiments of the invention, the electrode may be, for example, a heater, e.g. resistive heater, or a temperature sensor. The wires 12 of the wire grid 11 may be formed of any suitable metal and thus may form metal electrodes with a typical width of 25 nm or larger, more preferably of 50 nm or larger and most preferably between 50 nm and 150 nm, e.g. a width of 100 nm. The wires 12 of the wire grid 11 may be spaced with a separation distance between the wires 12 of less than half the wavelength of the radiation in the medium that fills the space between the wires, typically between 50 nm and 150 nm, for example 100 nm. Such a wire grid 11 may provide a uniform heater as it comprises one or a plurality of metal electrodes that can be used in the temperature control. A uniform heater may allow obtaining a high temperature uniformity in a sample fluid. This may, for example, be required in real-time polymerase chain reaction (RT-PCR) processes.

The wires 12 can, according to embodiments of the invention, be addressed individually or all together. An advantage of addressing the wires 12 individually is that the reaction chamber 22 can be heated locally or if the wire is used as a sensor the sensing will be local. An advantage of addressing the wires 12 all together is that the sample fluid in the reaction chamber 22 can be uniformly heated, which may be required for e.g. particular chemical, biological or biochemical reactions or processes in the reaction chamber 22 such as e.g. PCR.

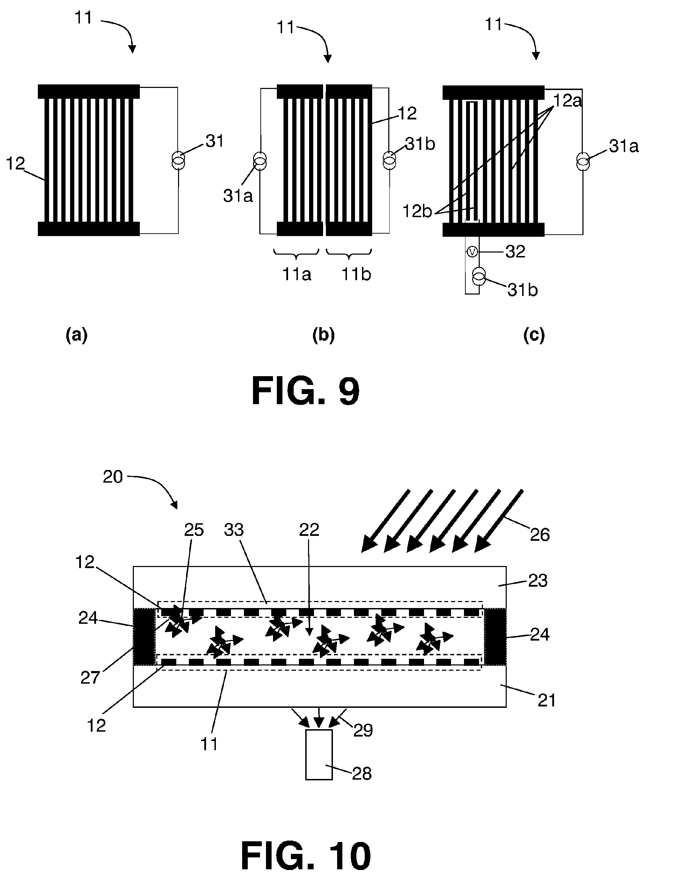

According to embodiments of the invention, all wires 12 of the wire grid 11 may be used as temperature control electrodes. Alternative some of the wires may be used for one function and others for another function. For example, one or more wires may be used for temperature sensing and one or more wires may be used for heating. For example, according to embodiments, the wires 12 may be used as resistive heating electrodes (see Fig. 9(a)). By driving a current through the wires 12 by means of e.g. a current source 31 as illustrated in Fig. 9(a) heat will be generated by dissipation of power in the wires 12. According to these embodiments, all wires 12 of the wire grid 11 may be connected to a same current source 31. According to another embodiment, the wires 12 of the wire grid 11 may be connected in segments 11a, 11b to different current sources 31a, 31b (see Fig. 9(b)). According to these embodiments, different parts 11a, 11b of the wire grid 11 can be driven at different times and/or with different driving signals. They can be used for, for example, local heating of the reaction chamber 22 which may be required for e.g. particular chemical, biological or biochemical reactions or processes in the reaction chamber 22.

According to further embodiments (not illustrated in the drawings), the wires 12 of the wire grid 11 may be used as resistive temperature sensing electrodes. Therefore, a current source 31 may be provided for sending current through the wires 12 and a voltage measuring means 32 for measuring the voltage over the wires 12. From the current sent through the wire 12 and the change in voltage measured over the wire, a change in resistivity in the wires 12 can be determined. The change in resistivity of the wires 12 may then be a measure for change in temperature of the sample fluid. Such information may give information about a chemical, biochemical or biological reaction taking place in the sample fluid in the reaction chamber 22.

According to preferred embodiments, a first number of the wires 12a of the wire grid 11 may be used for resistive heating and a second number of the wires 12b of the wire grid 11 may be used for resistive temperature sensing. This is illustrated in Fig. 9(c). According to these embodiments, for example, the sample fluid may be uniformly heated by sending current through the wires 12a which function as heaters in order to start a reaction. This may be done by current source 31a. Once the reaction has started, the wires 12b adapted for functioning as resistive temperature sensors may cease there function or may be used for determining the temperature of the sample fluid during reaction. Herefore, as already explained above, a change in resistivity in the wires 12 can be determined from the current sent through the wire 12a and the change in voltage measured over the wire 12b. The change in resistivity of the wires 12b may then be a measure for change in temperature of the sample fluid and may give information about a chemical, biochemical or biological reaction taking place in the sample fluid in the reaction chamber 22.

According to still other embodiments, all wires 12 of the wire grid 11 may be adapted such that they may be used for both heating and temperature sensing.

Hereinafter, some specific examples illustrating possible configurations of the luminescence sensor 20 according to the first embodiment of the present invention will be described. It has to be noted that the function of temperature electrodes will not be discussed anymore for the examples described hereinafter. It has to be understood that in all examples that will be discussed hereinafter, the wires 12 of the wire grid 11 also function as temperature control electrodes according to any of the embodiments as described above. Wherever s-polarisation or p-polarisation is used in the examples below, it is to be understood that more generally a first and a second type of polarisation is meant, and that both types are interchangeable.

Fig. 3 illustrates a first example of the luminescence sensor 20 according to the first embodiment of the present invention. According to this example the incident radiation 26 may be p-polarized radiation, e.g. p-polarized light. The p-polarized radiation 26 may, according to the present example, be incident through the lid 23 onto the luminophores 25, e.g. fluorophores, present in the sample fluid in the reaction chamber 22. According to this example, the wire grid 11 may be such that it shows p-polarization transmission. The lid 23 may be made from a material which is transparent for the excitation radiation used, such as e.g. glass or plastic. Hence, the p-polarized radiation 26 incident on the lid 23 is transmitted through the lid 23 and excites the luminophores 25, e.g. fluorophores, in the reaction chamber 22 which thereby generate luminescent, e.g. fluorescent, radiation 27. The incident p-polarized radiation 26 is then further transmitted through the wire grid 11 where it will be absorbed by the substrate 21 or, when the substrate is made of a transparent material such as e.g. glass or plastic, would leave the luminescence sensor 20 through the substrate 21. A part of the luminescent, e.g. fluorescent, radiation 27 will be able to reach the detector 28 through the lid 23. This part is indicated by arrows 29. It is assumed that the luminescent, e.g. fluorescent, radiation 27 generated by the luminophores 25, e.g. fluorophores, is randomly distributed and comprises 50% p-polarized and 50% s-polarized luminescent, e.g. fluorescent, radiation 27. Furthermore, as illustrated in Fig. 3, the luminophores 25, e.g. fluorophores, radiate luminescence radiation 27, e.g. fluorescence light, in all directions. Because, according to this example, the wire grid 11 is such that it shows p-polarization transmission, it may be assumed that substantially half of the p-polarized part of the luminescent, e.g. fluorescent, radiation 27 will pass through the substrate 21 and leave the luminescence sensor 20 without being detected. The other half of the p-polarized part of the luminescent radiation may be able to reach the detector 28. On the other hand, because the wire grid 11 only allows p-polarized radiation to pass through it, the s-polarized part of the luminescent, e.g. fluorescent, radiation 27 will be reflected by the wire grid 11 in the direction of the detector 28 and will thus substantially fully be detected by the detector 28. Hence, without taking into account interface reflections and absorptions, according to this embodiment of the present invention, 75% of the intensity of the luminescent, e.g. fluorescent, radiation 27 (i.e. 25% of the intensity of p-polarized luminescent, e.g. fluorescent, radiation and 50% of the intensity of s-polarized luminescent, e.g. fluorescent, radiation) generated by the luminophores 25, e.g. fluorophores, may reach the detector 28. When the wire grid 11 would not have been present, only 50% of the luminescent, e.g. fluorescent, radiation 27 would have been detected because only substantially half of the s-polarized part and substantially half of the p-polarized part of the luminescent, e.g. fluorescent, radiation 27 would have been able to reach the detector 28 as also substantially half of the s-polarized and of the p-polarized luminescent, e.g. fluorescent, light 27 would have been absorbed or transmitted by the substrate 21.

According to embodiments of the invention, a detector filter (not shown in Fig. 3) which transmits s-polarized light and reflects p-polarized light may be placed in front of the detector 28 for preventing incident p-polarized excitation radiation 26, reflected or scattered at interfaces, to reach the detector 28. This helps in reducing the background signal in the measured luminescence, e.g. fluorescent, signal.

Fig. 4 illustrates another example of a luminescence sensor 20 according to the first embodiment. In this example, the incident radiation 26 may be unpolarized light. The luminescence sensor 20 may be illuminated through the lid 23. The lid 23 may be formed of a material which is transparent for the excitation radiation used, such as e.g. glass or plastic. The unpolarized light 26 passes through the lid 23 of the sensor 20 and excites the luminophores 25, e.g. fluorophores, present in the reaction chamber 22, whereby the luminophores 25, e.g. fluorophores generate luminescent, e.g. fluorescent, light 27. Similar to the wire grid 11 in the example illustrated in Fig. 3, the wire grid 11 in the present example may be such that it transmits a first type of polarisation, e.g. p-polarized radiation, and reflects a second type of polarisation, e.g. s-polarized radiation. Hence, the p-polarized part of the unpolarized light 26 will pass through the wire grid 11 and will be absorbed by the substrate 21, or when the substrate 21 is formed of a transparent material such as e.g. glass or plastic, may leave the luminescence sensor 20 through the substrate 21, without being detected by the detector 28. The s-polarized part of the incident unpolarized light 26 will be reflected by the wire grid 24 and will, together with the luminescent, e.g. fluorescent, light 27 generated from the excited luminophores 25, e.g. fluorophores, reach the detector 28. A polarization filter 30 which shows p-polarization transmission, may be used in front of the detector 28 as illustrated in Fig. 4, so as to prevent the reflected s-polarized part of the incident excitation light 26 to reach the detector 28. A consequence of the use of this polarization filter 30 is that only the p-polarized part of the luminescent, e.g. fluorescent, light 27 will reach the detector 28. Hence, without taking into account interface reflections or absorptions and assuming that the luminescent, e.g. fluorescent, light 27 is random and comprises 50% p-polarized and 50% s-polarized luminescent, e.g. fluorescent, light 27, 25% of the intensity of the luminescent, e.g. fluorescent, light 27 may reach the detector 28. This 25% is formed by half of the p-polarized luminescence, e.g. fluorescence, light 27. The part of the luminescent, e.g. fluorescent, light 27 that reaches the detector 28 is indicated by arrows 29.

Yet a further example of the luminescence sensor 20 according to the first embodiment of the invention is illustrated in Fig. 5. According to this example, the incident radiation 26 may be s-polarized light. The s-polarized light 26 may be incident through the lid 23 onto the luminophores 25, e.g. fluorophores, in the reaction chamber 22 which are excited and emit luminescent, e.g. fluorescent, light 27. The lid 23 may be formed of a material which is transparent for the excitation radiation used, such as e.g. glass or plastic. Again, the wire grid 11 may be such that it shows p-polarization transmission. Hence, the incident s-polarized light 26 will be reflected by the wire grid 11. According to this example, the detector 28 may be located at an opposite side of the luminescence sensor 20 than the side from which it is irradiated. In that way, according to the present example, the background signal caused by detection of incident light 26 can be minimised because the incident s-polarized light 26 is reflected away from the detector 28 by the wire grid 11. The luminescent, e.g. fluorescent, light 27 generated by the luminophores 25, e.g. fluorophores, has to pass through the substrate 21 before it can be detected by the detector 28. Therefore, the substrate may, in this embodiment, preferably be formed of a material which is transparent for the luminescent radiation, e.g. fluorescent light 27, generated, and may for example be glass or plastic. Because the wire grid 11 shows p-polarization transmission, only the p-polarized part of the luminescent, e.g. fluorescent, light 27 will be able to reach the detector 28. Assuming that the luminescent, e.g. fluorescent, light 27 comprises 50% p-polarized and 50% s-polarized luminescent, e.g. fluorescent, light 27, 25% of the intensity of the luminescent, e.g. fluorescent, light 27 will reach the detector 28, i.e. half of the p-polarized part of the luminescence, e.g. fluorescence, light 27. The other half of the p-polarized part of the luminescence, e.g. fluorescence, light 27 generated by the luminophores 25, e.g. fluorophores, will reach the lid 23 and will be absorbed by the lid 23, or when, the lid 23 is formed of a material transparent for the generated luminescent radiation 27, will leave the sensor 20 through the lid 23. The part of the luminescent, e.g. fluorescent, light 27 that reaches the detector 28 is indicated by arrows 29.

In the above-described examples, the example illustrated in Fig. 4 is the preferred one with respect to suppression of the incident excitation radiation 26, e.g. excitation light. This is illustrated hereinafter by assuming that both the wire grid 11 and the additional detector filter 30 have, for example, a suppression of s-polarized light by a factor of 1000. The examples illustrated in Fig. 3 and 5 show a suppression of excitation light by a factor 1000 because they do not comprise such a detector filter 30, while the example illustrated in Fig. 4 shows a suppression of excitation light by a factor 1000 * 1000 = 1000000. Hence, the luminescence sensor 20 illustrated in Fig. 4 may have a lower background signal than the luminescence sensors 20 illustrated in Fig. 3 and 5.

In the above-described embodiments, the luminescence sensor 20 is irradiated from above, or in other words is irradiated through the lid 23. However, according to other embodiments, the luminescence sensor 20 may also be irradiated from below, or in other words may be irradiated through the substrate 21. This will be described in the following examples of the luminescence sensor 20 according to the first embodiment of the present invention.

Fig. 6 illustrates a further example of the luminescence sensor 20 according to the first embodiment of the present invention. According to this example, the incident radiation 26 may be p-polarized light. The p-polarized light 26 may be incident through the substrate 21. Hence, according to this example, the substrate may be formed of a material which is transparent for the incident radiation 26, such as glass or plastic. The wire grid 11 may be such that it shows p-polarization transmission. Hence, the incident p-polarized light 26 transmits through the substrate 21 and through the wire grid 11 and excites the luminophores 25, e.g. fluorophores, present in the sample fluid in the reaction chamber 22 hereby emitting luminescent, e.g. fluorescent, light 27. According to this example, the detector 28 for detecting the luminescent, e.g. fluorescent, light 27 may be located at a same side of the luminescent sensor 20 than the side from which the sensor 20 is irradiated. As the wire grid 11 shows p-polarization transmission, only the p-polarized part of the luminescent, e.g. fluorescent, light 27 will be able to reach the detector 28. As the luminophores 25, e.g. fluorophores, emit luminescent, e.g. fluorescent, light 27 in all directions, about half of the p-polarized part of the luminescent, e.g. fluorescent, light 27 will be able to reach the detector 28. The other half of the p-polarized part of the luminescent, e.g. fluorescent, light 27 will be absorbed by the lid 23 or will, when the lid 23 is formed of a material which is transparent for the generated luminescent radiation, such as e.g. glass or plastic, leave the sensor 21 through the lid 23, without being detected. Hence, without taking into account reflections and/or absorptions, according to the present example, 25% of the intensity of the luminescent, e.g. fluorescent, light 27 will reach the detector 28. The part of the luminescent, e.g. fluorescent, light 27 that reaches the detector 28 is indicated by arrows 29.

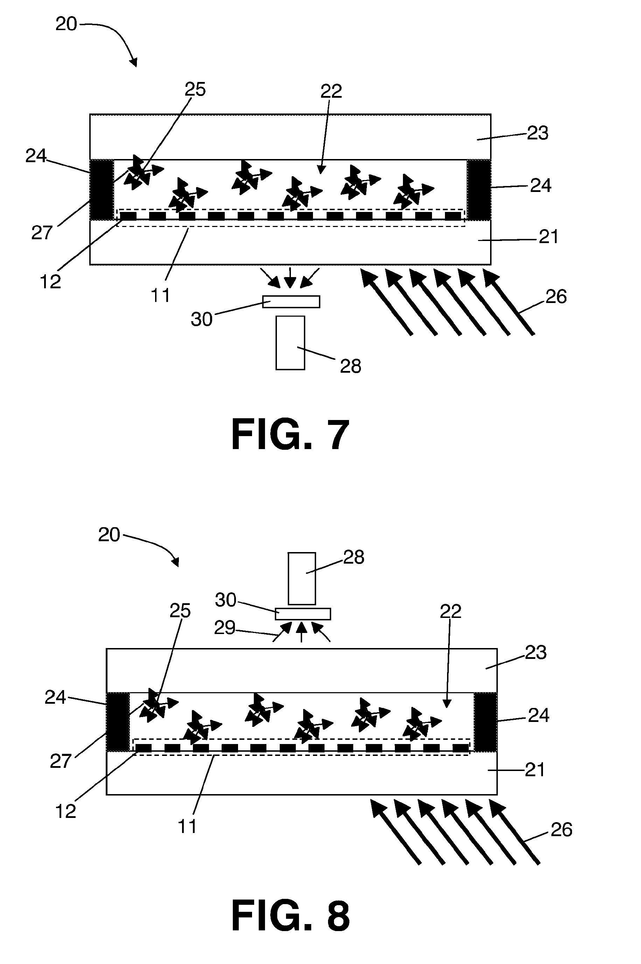

Fig. 7 illustrates a further example of the luminescence sensor 20 according to the first embodiment of the present invention. According to this example, the incident radiation 26 may be unpolarized light. The unpolarized light 26 may, according to this example, be incident through the substrate 21. Therefore, again, the substrate 21 may be formed of a material which is transparent for the excitation radiation used, such as e.g. glass or plastic. The wire grid 11 may be such that is shows p-polarization transmission. Hence, the incident unpolarized light 26 is transmitted through the substrate 21 but only the p-polarized part of the incident unpolarized light 26 will be transmitted through the wire grid 11 and excite the luminophores 25, e.g. fluorophores, in the sample fluid in the reaction chamber 22 hereby generating luminescent, e.g. fluorescent, light 27. The s-polarized part of the incident unpolarized light 26 will be reflected back through the substrate 21 and out of the luminescence sensor 20. An additional filter 30 may preferably be located in between the substrate 21 and the detector 28 for preventing the s-polarized part of the incident excitation light 26 from reaching the detector 28. In that way, the background signal can be kept minimal. As the wire grid 11 shows p-polarization transmission, only the p-polarized part of the luminescent, e.g. fluorescent, light 27 will be able to reach the detector 28. The luminophores 25, e.g. fluorophores, emit luminescence, e.g. fluorescence, light 27 in all directions. Half of the p-polarized part of the luminescence, e.g. fluorescence, light 27 will transmit through the wire grid 11 and the substrate 21 and will reach the detector 28. The other half of the p-polarized part of the luminescence, e.g. fluorescence, light 27 and the s-polarized part of the luminescence light 27 will be absorbed by the lid 23 or will, when the lid 23 is formed of a material which is transparent for the luminescence radiation generated, such as e.g. glass or plastic, leave the sensor 20 through the lid 23, without being detected. Without taking into account interface reflections or absorptions, according to this example, 25% of the intensity of the luminescent, e.g. fluorescent, light 27 or, in other words, half of the p-polarized part of the luminescence, e.g. fluorescence, light 27 will reach the detector 28. The part of the luminescent, e.g. fluorescent, light 27 that reaches the detector 28 is indicated by arrows 29.

Still a further example of the luminescence sensor 20 according to the first embodiment of the present invention is illustrated in Fig. 8. According to this example, the incident radiation 26 may be unpolarized or p-polarized light. The unpolarized or p-polarized light 26 may be incident through the substrate 21. Hence, the substrate may be formed of a transparent material such as e.g. glass or plastic. The wire grid 11 may be such that it shows p-polarization transmission. Hence, in both the case of unpolarized light or of p-polarized light, the p-polarized part of the incident light 26 will be transmitted through the wire grid 11 and excite the luminophores 25, e.g. fluorophores, in the sample fluid in the reaction chamber 22, hereby generating luminescence, e.g. fluorescence, radiation 27. In case the incident radiation is unpolarized light 26, the s-polarized part of the incident unpolarized light 26 may be reflected back out of the sensor 20 by the wire grid 11. According to this example, the detector 28 may be located at an opposite side of the luminescence sensor 20 than the side from which it is irradiated. A detector filter 30 which shows s-polarization transmission may be used in front of the detector 28 to prevent the p-polarized part of the incident light 26 from reaching the detector 28. This helps in minimising the background signal due to detection of incident radiation 26. As a consequence, only the s-polarized part of the luminescent, e.g. fluorescent, light 27 will be detected by the detector 28. The luminophores 25, e.g. fluorophores, emit luminescence, e.g. fluorescence, light 27 in all directions. However, as the wire grid 11 shows p-polarization transmission, all s-polarized luminescence, e.g. fluorescence, light 25 will be directed towards the detector 28 because the part that would be directed to the substrate 21 will be reflected by the wire grid 11. Hence, without taking into account interface reflections or absorptions, according to this example, 50% intensity of the luminescent, e.g. fluorescent, light 27 emitted by the luminophores 25, e.g. fluorophores, will be detected by the detector 28. The part of the luminescent, e.g. fluorescent, light 27 that reaches the detector 28 is indicated by arrows 29.

In all examples of the luminescence sensor 20 according to the first embodiment of the present invention it has to be understood that the p- and s- polarized parts of the incident radiation 26, the p- or s- polarization transmission of the wire grid 11 and the p- or s- polarization transmission of the optional detector filter 30 may be interchanged.

From the above examples it becomes clear that most preferably the detector 28 may be positioned opposite the side where the wire grid 11 is located, i.e. in the examples illustrated on the side of the lid 23 (see Fig. 3 and 8), independent of whether the luminescence sensor 20 is irradiated through the lid 23 or through the substrate 21. In these cases, the highest luminescence, e.g. fluorescence, signals (75% and 50% respectively) may be detected by the detector 28. In these examples, preferably, a polarization-based detector filter 30 may be used in front of the detector 28. Although this also suppresses the luminescent, e.g. fluorescent, signal, it prevents incident radiation 26 reflected and/or scattered at interfaces and other in-homogeneities to reach the detector 28 and thus is minimises the background signal originating from detection of incident radiation 26. According to other embodiments, instead of a polarization based detector filter 30, an antireflection coating may be provided between the detector 28 and the radiation source (which is not shown in the figures) to prevent reflection of incident radiation 26 into the detector 28.

The radiation source for generating excitation radiation 26 may, for example, be a LED or a laser and may have a narrow spectral width (e.g. monochromatic light source). Preferably, the incident excitation radiation 26 may be collimated to prevent specular reflection of the incident radiation 26 into detector 28.

According to other embodiments, further optical features may be incorporated into the luminescence sensor 20 to further suppress background signals. For example, a spectral filter may be positioned between the radiation source and the sample fluid, and/or between the detector 28 and the sample fluid.

In the above-described examples where the radiation source and the detector 28 are located on a same side of the luminescence sensor 20, that side of the luminescence sensor 20, either formed by the lid 23 or by the substrate 21, may be formed of a material which is transparent to both the excitation radiation and the generated luminescence radiation, such as e.g. glass or plastic. In these cases, the opposite side of the luminescence sensor 20, either formed by the substrate 21 or by the lid 23, may comprise an absorbing layer such as e.g. a black resist. This suppresses reflections of the incident radiation 26 that otherwise may end up in a background signal detected by the detector 28.

In general, when either or both of the detector 28 or the radiation source are located at the side of the substrate 21, the substrate 21 may be formed of a material which is transparent to the luminescence radiation and/or the excitation radiation, such as e.g. glass or plastic. When either or both of the detector 28 or the radiation source are located at the side of the lid 23, the lid 23 may be formed of a material which is transparent to the luminescence radiation and/or the excitation radiation, such as e.g. glass or plastic. When none of the detector 28 and the radiation source are located at the side of the substrate 21, the substrate 21 may comprise an absorbing layer such as e.g. a black resist. The same applies for the lid 23, when none of the detector 28 or the radiation source are located at the side of the lid 23, the lid 23 may comprise an absorbing layer such as e.g. a black resist.

Besides the suppression of the background signal as discussed in the different examples, incorporation of a conductive grating, e.g. a wire grid 11, having both the function of polarization-based optical filter and temperature control electrodes according to embodiments of the present invention has the following additional advantages:
- A conductive grating, e.g. wire grid 11, according to embodiments of the present invention may provide a uniform heater, especially when it consists of metal electrodes. Such a uniform heater allows obtaining a high temperature uniformity in a sample volume required for specific techniques in, for example, biochemistry, such as for example real-time PCR.
- A conductive grating, e.g. wire grid 11, according to embodiments of the present invention provides a low-cost solution to incorporate both temperature control electrodes, such as a heater or a sensor, and a high-quality polarization-based optical filter within a single simple process. Biochips, for example, are generally disposable devices. Therefore, the luminescence sensors 20 should be relatively inexpensive, and, hence, incorporation of high-quality spectral filters (like in bench-top/laboratory machines) to suppress excitation radiation from illuminating the optical detector 28 is not an option.
- Another advantage of using a conductive grating, e.g. wire grid 11, according to embodiments of the present invention is that it has high extinction values (ratio between p-and s-polarized light) for a wide range of angles of incidence. For example for commercially available wire grid polarizers proper operation of angles of incidence up to 20 degrees has been routinely demonstrated.
- The intensity of the luminescent, e.g. fluorescent, radiation 27 that can be detected with the optical detector 28 may be higher when polarization-based filtering, according to embodiments of the invention, is used than the case in which spectral filtering is used. By using polarization-based filtering the full excitation spectrum and luminescent, e.g. fluorescent, spectrum can be used, whereas spectral filtering may significantly narrow down the useful spectral bandwidth.
- Considering the optical detection of a luminescent, e.g. fluorescent, signal based on polarization-based filtering coming from a device (e.g. Lab-on-a-Chip) by a reading device (e.g. bench-top apparatus), the filter(s) in the reading device need not to be changed when different luminophores 25, e.g. fluorophores, (i.e. with different spectra) are to be detected. In contrast to the conventionally used spectral filters, polarization-based filters do not depend on the spectrum of the excitation radiation or luminescence, e.g. fluorescence, spectrum. Hence, the polarization-based filter approach enabled by the conductive grating, e.g. wire grid 11, according to embodiments of the present invention, allows to detect multiple different luminescent, e.g. fluorescent, spectra emanating from different luminophores 25, e.g. fluorophores, present in a sample fluid in the reaction chamber 22 through a single filter set without the need to match the luminescence, e.g. fluorescence, spectra of the luminophores 25, e.g. fluorophores.

According to a second embodiment of the present invention, the luminescence sensor 20 may be a luminescence sensor 20 with features as described in the first embodiment and in the examples thereof, but may furthermore comprise at least a second conductive grating, e.g. wire grid 33, which may be located on a surface of the lid 23. In other words, the at least second conductive grating, e.g; wire grid 33, may be located at a side of the reaction chamber 22 opposite to the side of the reaction chamber 22 where the first conductive grating, e.g. wire grid 11, is located. Hence, according to the second embodiment of the invention, the luminescence sensor 20 may comprise at least two conductive gratings, e.g. wire grids 11, 33, of which at least one conductive grating, e.g. wire grid 11, is located on the substrate 21 and at least one conductive grating, e.g; wire grid 33, is located on the lid 23. According to the invention, at least one wire 12 of at least one of the conductive gratings, e.g. wire grids 11, 33, is used as temperature control electrode (e.g. as a heater and/or as a sensor). The second embodiment of the present invention will further be explained with reference to conductive gratings being wire grids, however the present invention is not limited thereto. The conductive grating comprises an array of a plurality of parallel wires with at least one aperture. One in-plane dimension of the aperture is below the diffraction limit in the medium that fills the aperture, and the other in-plane dimension is above the diffraction limit in the medium that fills the aperture. The array may be, but does not need to be, a periodic array. In the case of a wire grid, the array is a periodic array. At least some wires of the conductive grating are made of conductive materials. Preferably, the imaginary part of the refractive index of the material of the wires should be sufficiently large, typically larger than 1. Suitable materials for the wires are for example Al, Au, Ag, Cr. The wires may be made or formed by any suitable method, for example by thin film processing techniques, including printing of patterned metal structures or patterning a sputtered metal coating.

Optically, the at least two wire grids 11, 33 may most preferably have different polarization transmission and may thus function as a crossed-polarizer integrated in the luminescence sensor 20. For example, according to embodiments of the invention, the first wire grid 11 on the substrate 21 may show p-polarization transmission whereas the wire grid 33 on the lid 23 may show s-polarization transmission or vice versa. As wire grids 11, 33 may have a high polarization ratio (>99.9%; i.e., extinction better than 1000) the crossed wire grid polarizers formed by the first and second wire grids 11, 33 suppress the background signal while allowing at least part of the luminescent, e.g. fluorescent, radiation 27 to reach the detector 28.

Similar to the first embodiment, and as already mentioned above, besides the function of the wire grid 11 as an optical polarization-based filter, according to the present invention at least one of the wires 12 of at least one of the first and second wire grid 11, 33 also functions as temperature control electrode. According to embodiments of the invention, the temperature control electrode may, for example, be a heater, e.g. resistive heater, or a temperature sensor.

The wires 12 of the at least two wire grids 11, 33 may be formed of any suitable metal and thus may form metal electrodes with a typical width of 25 nm or larger, more preferably of 50 nm or larger and most preferably between 50 nm and 150 nm, e.g. a width of 100 nm. The wires 12 may be spaced with a separation distance between the wires 12 of less than half the wavelength of the radiation in the medium that fills the space between the wires, typically between 50 nm and 150 nm, for example 100 nm. Separation distance refers to the open space between the wires and not to the period of the wires. Such wire grids 11, 33 may provide a uniform heater, e.g. when it comprises metal electrodes. A uniform heater may allow obtaining a high temperature uniformity in a sample fluid. This may, for example, be required in real-time polymerase chain reaction (RT-PCR) processes.

When a plurality of wires 12 of at least one of the wire grids 11, 33 is used for functioning as temperature control electrodes, the wires 12 can, according to embodiments of the invention, be addressed individually or can be addressed all together. An advantage of addressing the wires 12 individually is that the reaction chamber 22 can be locally heated. An advantage of addressing the wires 12 all together is that the sample fluid in the reaction chamber 22 can be uniformly heated, which may be required for e.g. particular chemical, biological or biochemical reactions or processes in the reaction chamber 22 such as e.g. PCR.

According to embodiments of the invention, all wires 12 of at least one of the wire grids 11, 33 may be used as temperature control electrodes. According to embodiments, the wires 12 may be used as resistive heating electrodes (see Fig. 9(a)). By driving a current through the wires 12 by means of e.g. a current source 31 as illustrated in Fig. 9(a) heat will be generated by the dissipation of power in the wires 12. According to embodiments, a current source may be provided for each of the at least two wire grids 11, 33. According to other embodiments, one current source may be provided for all of the at least two wire grids 11, 33. According to another embodiment, the wires 12 of at least one of the wire grids 11, 33 may be connected in segments 11a, 11b to different current sources 31a, 31b (see Fig. 9(b)). According to these embodiments, different parts of at least one of the wire grids 11, 33 can be driven at different times and can be used for, for example, local heating of the reaction chamber 22 which may be required for e.g. particular chemical, biological or biochemical reactions or processes in the reaction chamber 22.

According to further embodiments, the wires 12 of at least one of the wire grids 11, 33 may be used as resistive temperature sensing electrodes. Therefore, a current source 31 may be provided for sending current through the wires 12 and a voltage measuring means 32 for measuring the voltage over the wires 12. From the current sent through the wire 12 and the change in voltage measured over the wires 12, a change in resistivity in the wires 12 can be determined. The change in resistivity of the wires 12 may then be a measure for a change in temperature of the sample fluid and may provide information about a chemical, biochemical or biological reaction taking place in the sample fluid in the reaction chamber 22.

According to preferred embodiments, a first number of the wires 12a of at least one of the wire grids 11, 33 may be used for resistive heating and a second number of the wires 12b of at least one of the wire grids 11, 33 may be used for resistive temperature sensing (see Fig. 9(c)). According to these embodiments, for example, the sample fluid may be uniformly heated by sending current through the wires 12a which function as heaters in order to start a reaction. This may be done by current source 31a. Once the reaction has started, the wires 12b adapted for functioning as resistive temperature sensors may be used for determining the temperature of the sample fluid during reaction. Herefore, as already explained above, a change in resistivity in the wires 12b can be determined from the current sent through the wires 12b and the change in voltage measured over the wires 12b. The change in resistivity of the wires 12b may then be a measure for change in temperature of the sample fluid and may give information about a chemical, biochemical or biological reaction taking place in the sample fluid in the reaction chamber 22.

According to still other embodiments, all wires 12 of at least one of the wire grids 11, 33 may be adapted such that they may be used for both heating and temperature sensing.

Hereinafter, an example of the luminescence sensor 20 according to the second embodiment will be described. In this example, the function of the wire grids 11, 33 as temperature control electrodes will not be discussed anymore. It has to be understood that the wire grids 11, 33 in the example can function as temperature control electrodes according to any of the embodiments described above.

An example of a configuration of the luminescence sensor 20 according to the second embodiment of the invention is illustrated in Fig. 10. According to this example, the incident radiation 26 may be unpolarized light. The unpolarized light 26 may be incident through the lid 23. The lid 23 may be formed of a material which is transparent to the incident radiation 26, such as e.g. glass or plastic. According to this example, the wire grid 33 on the lid 23 may be such that is shows s-polarization transmission and the wire grid 11 on the substrate 21 may be such that it shows p-polarization transmission. Hence, according to the present example, the unpolarized light 26 transmits through the lid 23 and the s-polarized part of the incident unpolarized light 26 is then transmitted through the wire grid 33 and excites the luminophores 25, e.g. fluorophores, present in the sample fluid in the reaction chamber 22, hereby generating luminescent, e.g. fluorescent, light 27. A detector 28 may be located at the side of the luminescence sensor 20 opposite to the side from which it is irradiated, i.e. at the side of the substrate 21. The luminophores 25, e.g. fluorophores, emit luminescent, e.g. fluorescent, light 27 in all directions. Because the wire grid 33 on the lid 23 show s-polarization transmission and thus p-polarization reflection, the p-polarized part of the luminescence, e.g. fluorescence, light 27 which, when the wire grid 33 would not be present on the lid 23, would be absorbed or transmitted by the lid 23 is now reflected by the wire grid 33 and can transmit through the wire grid 11 on the substrate 21. Therefore, when assumed that the luminescence, e.g. fluorescence, light 27 emitted by the luminophores 25, e.g. fluorophores, is random and comprises substantially 50% p- and substantially 50% s-polarization, substantially 50 % (the p-polarized part) of the luminescent, e.g. fluorescent, light 27 will transmit through the wire grid 11 on the substrate 21. The part of the luminescent, e.g. fluorescent, light 27 reaching the detector 28 is indicated by arrows 29. As an indication, according to the present example, without taking into account interface reflections or absorptions, substantially 50% of the intensity of the luminescent, e.g. fluorescent, light 27 may reach the detector 28. The same applies when the incident radiation 26 in the above-described set-up of Fig. 10 is s-polarized light.

Again, it has to be understood that in the above description of the second embodiment s- and p- polarizations of the incident radiation 26 and s- and p- polarization of the wire grids 11, 32 may be interchanged. Furthermore, excitation radiation 26 may also be incident through the substrate 21 with a detector 28 located on the side of the lid 23 (embodiment not illustrated in the drawings).

Besides the suppression of the background signal, the incorporation of at least two wire grids 11, 33 according to embodiments of the present invention has additional advantages:
- At least one of the wire grids 11, 33 according to embodiments of the present invention may provide a uniform heater when it consists of conductive electrodes, e.g. metal electrodes. Such a uniform heater allows obtaining in a sample volume the high temperature uniformity required for specific techniques in, for example, biochemistry, such as for example RT-PCR.
- The use of at least two wire grids 11, 33 according to embodiments of the present invention provides a low-cost solution to incorporate both temperature control electrodes, such as a heater or a sensor, and a high-quality polarization-based optical filter within a single simple process. Biochips, for example, are generally disposable devices. Therefore, the luminescence sensors 20 should be relatively inexpensive, and, hence, incorporation of high-quality spectral filters (like in bench-top/laboratory machines) to suppress excitation radiation to illuminate the optical detector 28 is not an option.

According to a third embodiment of the invention, a luminescence sensor 20 is provided which may be any of the above-described luminescence sensor embodiments, but which may comprise, instead of an external optical detector 28 as in the above-described embodiments, an optical detector 34 integrated in the substrate 21 of the luminescence sensor 20.

The luminescence sensor 20 according to the third embodiment of the invention may comprise at least a first wire grid 11 located on the substrate 21 of the sensor 20. As described in the above embodiments and examples, the at least first wire grid 11 comprises a plurality of wires 12 and functions both as a polarization-based optical filter and as temperature control electrodes. According to embodiments of the invention, the temperature control electrode may, for example, be a heater, e.g. resistive heater, or a temperature sensor. The wires 12 of the wire grid 11 may be formed of any suitable conductive material, preferably a metal and thus may form conductive electrodes, e.g. metal electrodes with a typical width of 25 nm or larger, more preferably of 50 nm or larger and most preferably between 50 nm and 150 nm, e.g. a width of 100 nm. The wires 12 may be spaced with a separation distance between the wires 12 of less than half the wavelength of the radiation in the medium that fills the space between the wires, typically between 50 nm and 150 nm, for example 100 nm. Separation distance refers to the open space between the wires and not to the period of the wires. Such a wire grid 11 may provide a uniform heater as it comprises conductive, e.g. metal electrodes. A uniform heater may allow obtaining a high temperature uniformity in a sample fluid. This may, for example, be required in real-time polymerase chain reaction (RT-PCR) processes.

According to embodiments of the invention, the wires 12 can be addressed individually or all together. An advantage of individually addressing the wires 12 is that the reaction chamber 22 can be locally heated. An advantage of addressing the wires 12 all together is that the sample fluid in the reaction chamber 22 can be uniformly heated, which may be required for e.g. particular chemical, biological or biochemical reactions or processes in the reaction chamber 22 such as e.g. PCR.

According to embodiments of the invention, all wires 12 of the wire grid 11 may be used as temperature control electrodes. According to embodiments, the wires 12 may be used as resistive heating electrodes (see Fig. 9(a)). By driving a current through the wires 12 by means of e.g. a current source 31 as illustrated in Fig. 9(a) heat will be generated by the dissipation of power in the wire 12. According to these embodiments, all wires 12 of the wire grid 11 may be connected to a same current source 31. According to another embodiment, the wires 12 of the wire grid 11 may be connected in segments 11a, 11b to different current sources 31a, 31b (see Fig. 9(b)). According to these embodiments, different segments of the wire grid 11 can be driven at different times and can be used for, for example, local heating of the reaction chamber 22 which may be required for e.g. particular chemical, biological or biochemical reactions or processes in the reaction chamber 22.

According to further embodiments, the wires 12 of the wire grid 11 may be used as resistive temperature sensing electrodes. Therefore, a current source 31 may be provided for sending current through the wires 12 and a voltage measuring means 32 for measuring the voltage over the wires 12. From the current sent through the wires 12 and the change in voltage measured over the wires, a change in resistivity in the wires 12 can be determined. The change in resistivity of the wires 12 may then be a measure for change in temperature of the sample fluid and may provide information about a chemical, biochemical or biological reaction taking place in the sample fluid in the reaction chamber 22.

According to preferred embodiments, a first number of the wires 12a of the wire grid 11 may be used for resistive heating and a second number of the wires 12b of the wire grid 11 may be used for resistive temperature sensing. This is illustrated in Fig. 9(c). According to these embodiments, for example, the sample fluid may be uniformly heated by sending current through the wires 12a which function as heaters in order to start a reaction. This may be done by current source 31a. Once the reaction has started, the wires 12b adapted for functioning as resistive temperature sensors may be used for determining the temperature of the sample fluid during reaction. Herefore, as already explained above, a change in resistivity in the wires 12 can be determined from the current sent through the wires 12b and the change in voltage measured over the wires 12b. The change in resistivity of the wires 12b may then be a measure for change in temperature of the sample fluid and may give information about a chemical, biochemical or biological reaction taking place in the sample fluid in the reaction chamber 22.

According to still other embodiment, all wires 12 of the wire grid 11 may be adapted such that they may be used for both heating and temperature sensing.

Hereinafter, example configurations of the luminescence according to the third embodiment of the present invention will be illustrated. The function of temperature control electrode of at least one of the wires 12 of the wire grid 11 will in these examples not be discussed anymore. It has to be understood that the wires 12 of the wire grid 11 also function as temperature control electrodes according to any of the embodiments as described above.

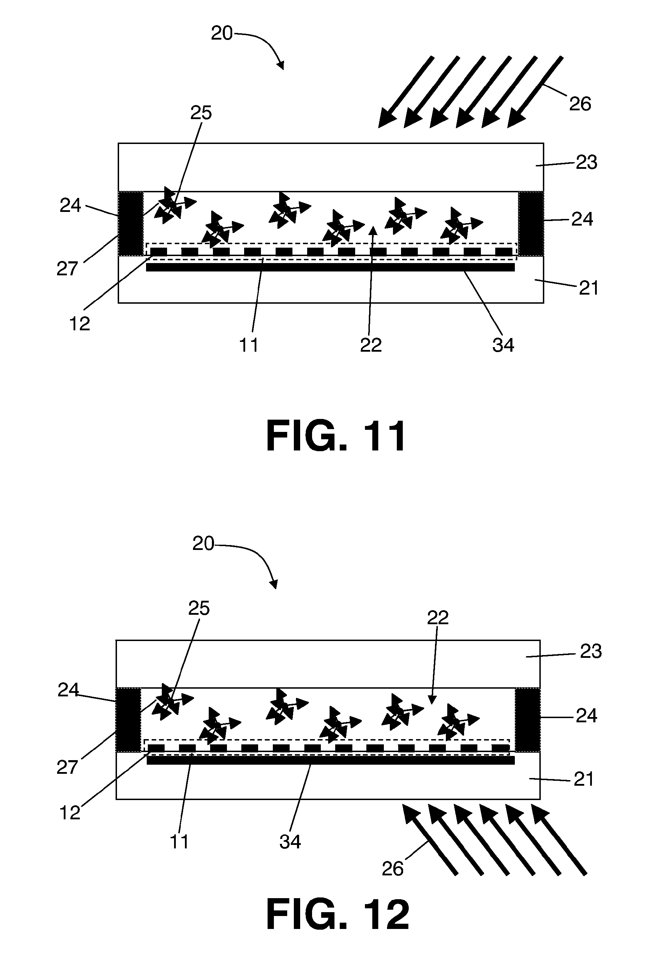

In the example given in Fig. 11, the excitation radiation 26 may be incident through the lid 23, i.e. from the opposite side of the luminescence sensor 20 than where the integrated optical detector 34 is located. The lid 23 may be made of a material which is transparent for the excitation radiation 26 used, such as e.g. glass or plastic. According to this embodiment, the incident radiation 26 may be s-polarized light. The s-polarized light 26 is incident through the lid 23 of the luminescence sensor 20 and excites the luminophores 25, e.g. fluorophores, present in the sample fluid in the reaction chamber 22, hereby generating luminescent, e.g. fluorescent, light 27. The luminophores 25, e.g. fluorophores, emit luminescence, e.g. fluorescence light 27 in all directions. According to this example, the wire grid 11 may be such that it shows p-polarization transmission. Hence, the s-polarized part of the luminescent, e.g. fluorescent, light will be reflected by the wire grid 11 and will not be able to reach the detector 34 integrated in the substrate 21. Half of the p-polarized part of the luminescent, e.g. fluorescent, light 27 will pass through the wire grid 11 and the substrate 21 and will thus reach the optical detector 34 integrated in the substrate 21. The other half of the p-polarized part of the luminescent, e.g. fluorescent, light 27 will leave the sensor 20 through lid 23 as the lid 23 is formed of a material transparent to the luminescent light 27, such as e.g. glass or plastic. Without taking into account interface reflections and absorptions, according to the present example, 25% of the intensity of the luminescent, e.g. fluorescent, light 27 generated by the luminophores 25, e.g. fluorophores, may reach the integrated detector 34.

Fig. 12 illustrates another, more preferred example of the luminescence sensor 20 according to the third embodiment in which the optical detector 34 may be integrated on a same side of the luminescence sensor 20 than where the excitation radiation 26 is incident. According to this example, the incident radiation 26 may for example be p-polarized light. The wire grid 11 on the substrate 21 may be such that it shows p-polarization transmission. The p-polarized light 26 may be incident through the substrate 21 and may pass through the wire grid 11. The substrate 21 may be formed of a material which is transparent to the excitation radiation 26, such as e.g. glass or plastic. In the reaction chamber 22 the p-polarized light 26 excites the luminophores 25, e.g. fluorophores, which thereby generate luminescence, e.g. fluorescence, light 27. The luminophores 25, e.g. fluorophores, emit luminescence, e.g. fluorescence, light 27 in all directions. As the wire grid 11 shows p-polarization transmission, the s-polarized part of the luminescence, e.g. fluorescence, light 27 will be reflected by the wire grid 11 and thus will be directed away from the detector 34. Half of the p-polarized part of the luminescence, e.g. fluorescence, light 27 will be able to be transmitted through the wire grid 11 and will thus reach the integrated detector 34. The other half of the p-polarized part of the luminescence, e.g. fluorescence, light 27 will be absorbed by the lid 23 or, when the lid 23 is formed of a material which is transparent to the luminescence radiation 27, such as e.g. glass or plastic, will leave the sensor 20 through the lid 23. Without taking into account interface reflections and absorptions, according to the present example, 25% of the intensity of the luminescent, e.g. fluorescent, light 27 generated by the luminophores 25, e.g. fluorophores, may reach the detector 34.

In the example illustrated in Fig. 12, to prevent direct illumination of the integrated optical detector 34 by incident excitation radiation 26, the luminescence sensor 20 may comprise a shield (e.g. metallic or black) which may be positioned between the optical detector 34 and the excitation radiation source (not shown in the figures). According to embodiments of the invention, the shield may, for example, be part of the integrated optical detector 34. In embodiments of the present invention, the integrated optical detector 34 may be smaller than the area underneath the fluid chamber (unlike the situation illustrated in Fig. 12). In alternative embodiments of the present invention, the integrated optical detector 34 may be envisioned as comprising multiple discrete photodetecting elements, which may for example be arranged in a regular or irregular array. A patterned shield may then be present on the back side, the pattern of the shield corresponding to the array of the photodetecting elements, which allows incident light to reach the luminophores, but prevents incident light from directly impinging on the optical detector 34.

The use of an integrated detector 34 in a luminescence sensor 20 may be advantageous because the intensity of incident radiation 26 reflected and/or scattered on interfaces and/or inhomogeneities and detected by an integrated optical detector 34 may be lower than in the case of an external optical detector 28, as was the case in the first and second embodiment of the invention, as the integrated detector 34 may be located closer to the reaction chamber 22 than an external optical detector 28. In addition, the integrated optical detector 34 may be able to detect a larger luminescent, e.g. fluorescent, intensity than the external detector 28. This is because there are less losses due to scattering in air because the luminescent, e.g. fluorescent, radiation 27 does not have to leave the sensor 20 to be detected by the integrated detector 34. Furthermore, the angle of collection increases and the number of medium boundaries and corresponding reflections decreases because the detector 34 is integrated in the substrate 21.

The integrated optical detector 34 may, for example, be a photodiode, such as e.g. a pin-diode. The integrated optical detector 34 may comprise an array of optical detectors 34. For example, multiple segmented detectors 34 or a plurality of detectors 34 may be incorporated in the substrate 21 of the luminescence sensor 20. Preferably, the integrated optical detectors 34 may be fabricated by using one of the known large area electronics technologies, such as a-Si, LTPS or organic technologies.

Advantages of luminescence sensors 20 having an integrated optical sensor 34 may be, among others:
- on-chip luminescence, e.g. fluorescence, signal acquisition or generation system improves both the speed and the reliability of analysis chips or sensor devices.
- reduced costs for the manufacturing process which may particularly be advantageous in the case of portable hand-held sensor devices for applications such as point-of-care diagnostics and roadside testing (i.e. no central bench-top machine needed anymore).
- the intensity of the luminescent, e.g. fluorescent, radiation 27 can be enlarged as the angle of collection increases and the number of medium boundaries and corresponding reflections decreases.

The luminescence sensor 20 according to the third embodiment of the invention may also have other configurations. It has to be noted that the configurations described above in the first and second embodiments and their examples may also be applied to the luminescence sensor 20 according to the third embodiment. The only difference between the configurations described above is that the luminescence sensors 20 according to the third embodiment may comprise an integrated optical detector 34 rather than an external optical detector 28. It will be understood by a person skilled in the art that the luminescence sensor 20 according to the third embodiment of the invention has the same advantages as described for the first and second embodiment of the invention, i.e. besides the suppression of the background signal, the incorporation of a wire grid 11 according to embodiments of the present invention has additional advantages:
- A wire grid 11 according to embodiments of the present invention provides a uniform heater as it consists of conductive electrodes, e.g. metal electrodes. Such a uniform heater allows obtaining a high temperature uniformity in a sample volume required for specific techniques in, for example, biochemistry, such as for example real-time PCR.
- A wire grid 11 according to embodiments of the present invention provides a low-cost solution to incorporate both temperature control electrodes, such as a heater or a sensor, and a high-quality polarization-based optical filter within a single simple process. Biochips, for example, are generally disposable devices. Therefore, the luminescence sensors 20 should be relatively inexpensive, and, hence, incorporation of high-quality spectral filters (like in bench-top/laboratory machines) to suppress excitation radiation to illuminate the optical detector 28 is not an option.

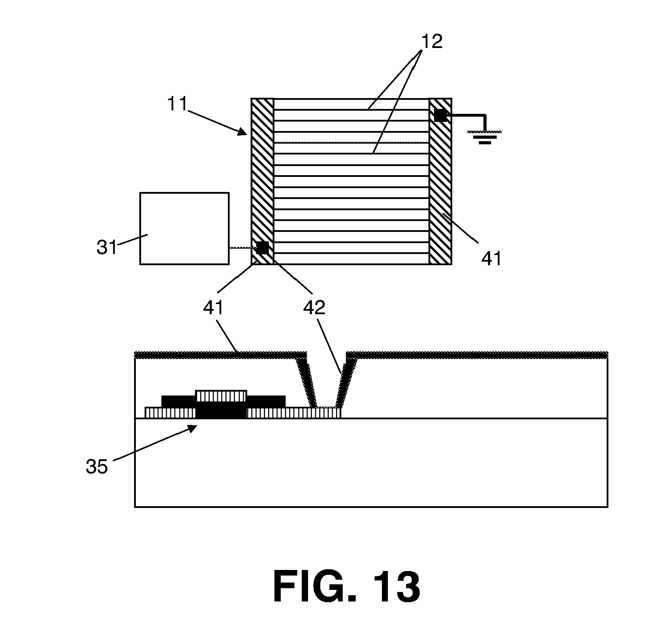

According to a fourth embodiment of the present invention, the luminescence sensor 20 may comprise a plurality of wire grids 11 as described in the different embodiments and examples of the present invention integrated in a thermal processing array. Each of the plurality of wire grids 11 may be individually addressed. Fig. 13 schematically illustrates a way of addressing a wire grid 11 in such a thermal processing array via a switch 35, e.g. a transistor switch, which may preferably be a thin film transistor (TFT), but may also be a diodes, a MIM diode, preferably using large area electronics technologies such as e.g. a-Si, LTPS, organic TFTs etc. According to the present invention, the wire grid 11 functions as a polarization-based optical filter whilst at least one of its wires 12 is used as a temperature control electrode (e.g. heater or sensor).

The example given in Fig. 13 has only one current source 31 for all wires 12 of the wire grid 11. Therefore, the wires 12 are applied between two wire electrodes 41 as illustrated in Fig. 13. The current source 31 is connected to the switch 35 through a via connection 42. When the wire grid 11 is addressed, the switch 35 allows current to flow through the wire electrode 41 to the wires 12.

It has to be understood that the example given in Fig. 13 is not intended to limit the invention in any way. The wires 12 of the wire grids 11 in the thermal processing array 40 may also be addressed as was described for the above embodiments and as was illustrated in Fig. 9(a) to (c).

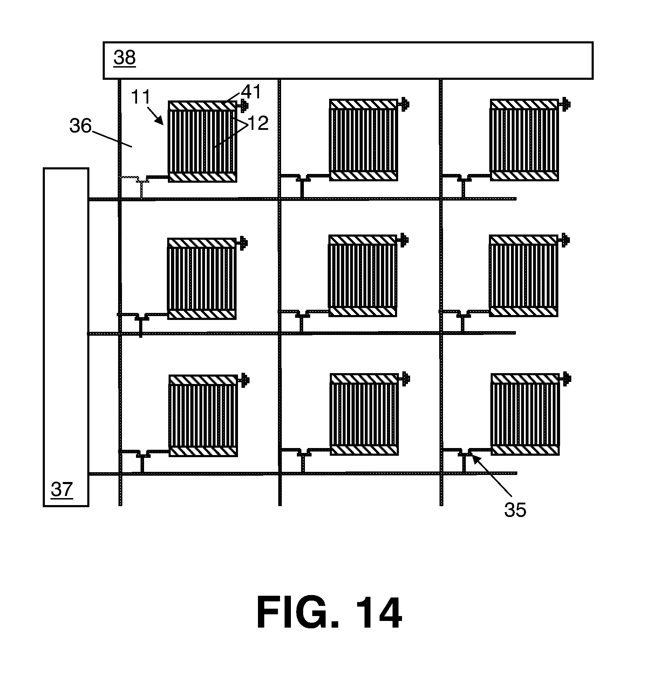

The thermal processing array 40 may comprise an array of temperature controlled compartments 36 that can be processed in parallel and independently to allow high versatility and high throughput (see Fig. 14). Such a processing array 40 may comprise at least one wire grid 11 for each compartment 36, the wire grid 11 functioning as a polarization-based optical filter and at least one of the wires 12 of the at least one wire grid 11 also functioning as heating element and/or temperature sensor. The compartments 36 may furthermore comprise feedback control systems.

The thermal processing array 40 according to the fourth embodiment of the invention can be used to either maintain a constant temperature across an entire area of each compartment 36 individually, or alternatively to create a pre-defined time-dependent temperature profile in each compartment 36 if each compartment 36 is configured in the form of an array and different portions of the reaction chamber 22 require different temperatures. In all cases, the thermal processing array 40 may comprise a plurality of individually addressable and drillable wire grids 11, and may optionally comprise additional elements such as temperature sensors and fluid-mixing or fluid-pumping elements.

The thermal processing array 40 according to embodiments of the invention may be beneficial for numerous biotechnological applications. For example, the degree of multiplexing in real-time PCR may usually be limited to four, more often limited to two (e.g. due to the biochemistry). To increase the total number of analytes to be diagnosed or detected, the thermal processing array 40 comprising a plurality of different compartments 36 for parallel detection of different analytes may be beneficial for use in DNA amplification processes, such as real-time PCR processes.

Arrays of temperature control elements have already been described in literature, for example temperature control elements comprising individually controlled elements (see US2004/0053290A1) or temperature control elements based on CMOS technology (see WO2005037433A1). However, according to the present invention it is proposed to incorporate a thermal processing array comprising wire grids 11 with a plurality of wires 12 and functioning both as polarization-based optical filter and temperature control electrodes into a luminescence sensor, e.g. a luminescence biosensor, e.g. a fluorescence biosensor.

Preferably, the thermal processing array 40 may be based on active matrix principles. This is illustrated in Fig. 14. In an active matrix approach, individual wire grids 11 are logically organised in rows an columns. The terms "row" and "column" are used to describe sets of array elements, in particular wire grids 11, which are linked together. The linking can be in the form of a Cartesian array of rows and columns, however the present invention is not limited thereto. As will be understood by those skilled in the art, columns and rows can be easily interchanged and it is intended in this disclosure that these terms be interchangeable. Also, non-Cartesian arrays may be constructed and are included within the scope of the invention. Accordingly the terms "row" and "column" should be interpreted widely. To facilitate in this wide interpretation, there may be referred to "logically organised rows and columns". By this is meant that sets of wire grids are linked together in a topologically linear intersecting manner; however, that the physical or topographical arrangement need not be so.

The individual wire grids 11 may be addressed one row or column at a time. A row of wire grids 11 may be selected by a row select driver, e.g. a select driver IC 37. A column select driver, e.g. a heater driver IC 38 then addresses the wire grids 11 in a particular column of the selected row such that the corresponding transistor switch 35 may be opened and the wires 12 of the selected wire grids 11 can heat the corresponding compartment 36.

An active matrix array may preferably be fabricated from one of the well-known large area electronics technologies, such as a-Si, LTPS or organic semiconductor technologies. Besides a TFT as a switch 35, also diodes or MIM (metal-insulator-metal) could be used as active element.

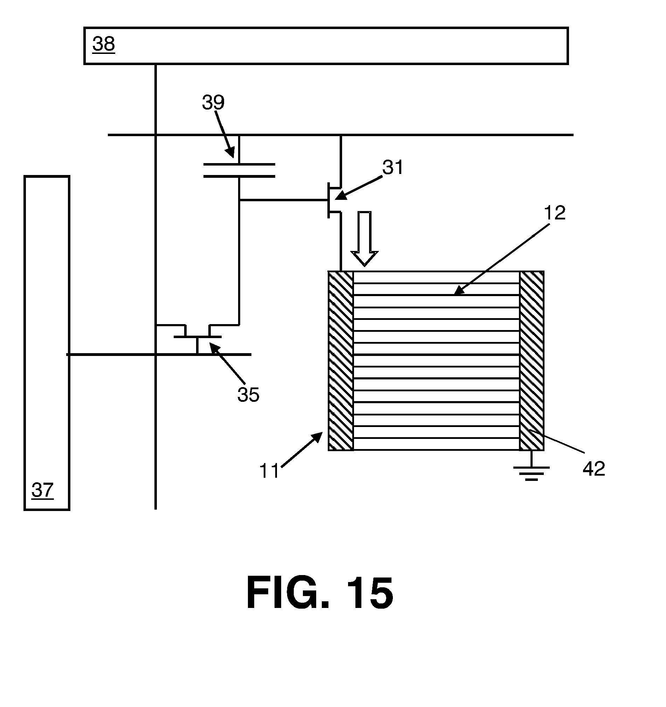

According to further embodiments of the invention, the select driver IC 37 may drive a local memory function, whereby it becomes possible to extend the drive signal to a particular cell 36 beyond the time that the heater is actually addressed. This can be used to create a pre-defined time-dependent temperature profile. The local memory function can be formed by a memory element 39. In many cases, the memory element may be a simple capacitor. For example, in the case of a current signal driving the wire grid 11 (see Fig. 15) a memory element 39, e.g. an extra capacitor, may be provided between the switch 35 and a power line voltage to store the voltage on the gate of a current source transistor 31 and to maintain the heater current whilst e.g. another line of wire grids 11 is being addressed. Adding the local memory function 39 allows the heating signal to be applied for a longer period of time, whereby the temperature profile can be better controlled.

Hereinafter, a specific example is provided of the use of a luminescence sensor in real-time polymerase chain reaction (RT-PCR). In numerous biotechnological applications, such as molecular diagnostics (e.g. for clinical applications, forensic, food applications), there is a need for a real-time quantitative DNA amplification (RT-PCR) module on a (disposable) biochip or similar system comprising an array of (individually) temperature controlled reaction compartments of which an optical luminescent, e.g. fluorescent, signal can be read-out with a high signal to background ratio. Therefore, the luminescence, e.g. fluorescence, sensor 20 according to embodiments of the invention may advantageously be used in real-time PCR.

The present invention may be used for quantitative real-time PCR, e.g. in medical diagnostics. In quantitative real-time PCR, the presence of amplified products is quantitatively recorded during temperature processing using reporter molecules (e.g. molecular beacons, scorpions, etc.) that generate an optical signal that is measured in real-time in the same device. The recorded signal is a measure for the presence as well as the concentration(s) of specific nucleic acid molecules, for example (but not limited to) a bacterium or a set of bacteria.

Quantitative real-time-PCR is very accurate and has a very large dynamic range of starting target molecule determination (at least five orders of magnitude, compared to the one or two orders of magnitude typically observed with an endpoint assay). Unlike other quantitative PCR methods, real-time PCR based on fluoregenic probes or fluorophores does not require post-PCR sample handling, preventing potential PCR product carry-over contamination and resulting in much faster and higher throughput assays. Moreover, quantitative real-time PCR is increasingly being relied upon for the enforcement of legislation and regulations dependent upon the trace detection of DNA.

In real-time PCR reactions are characterized by the point in time during cycling when amplification of a PCR product is first detected rather than the amount of PCR product accumulated after a fixed number of cycles.

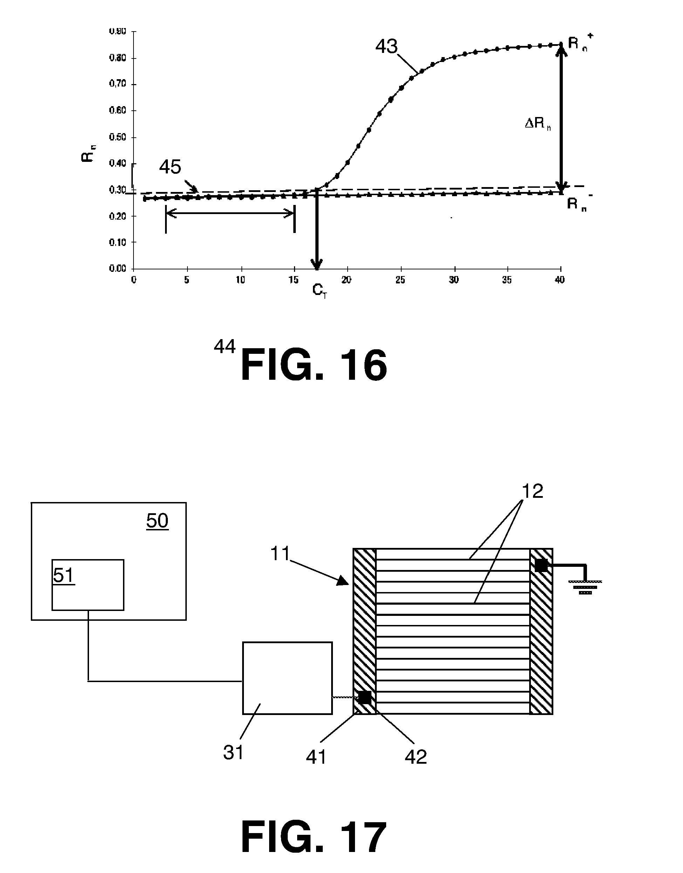

Fig. 16 shows a representative amplification plot (fluorescence in function of cycle number) and defines the terms used in the quantisation analysis.

An increase in fluorescence (indicated by curve 43) above the baseline (indicated by reference number 44) indicates the detection of accumulated PCR product. The parameter C_{T} (threshold cycle) is defined as the fractional cycle number at which the fluorescence passes the fixed threshold 45. The higher the initial amount of genomic DNA, the sooner accumulated product is detected in the PCR process, and the lower the C_{T} value is. A plot of the log of initial target copy number for a set of standards versus C_{T} is a straight line. Quantisation of the amount of target in unknown samples may be accomplished by measuring C_{T} and using the standard curve to determine starting copy number. C_{T} values are very reproducible in replicates because the threshold is picked to be in the exponential phase of the PCR. In the exponential phase, reaction components are not limiting and replicate reactions exhibit uniform and reproducible results.

Real-time PCR requires that reproducible and accurate temperature control during experiments is performed and different steps may require different temperatures. When using a luminescence sensor 20 according to embodiments of the present invention, no additional heating devices are required because the heating function is incorporated in the wire grid 11 that is integrated in the luminescence sensor 20. Heating the sample fluid, measuring a temperature of the sample fluid and detecting luminescence, e.g. fluorescence, radiation 27 can be done with a single sensor 20 and does not require complicated process steps.

Furthermore, the detection sensitivity in quantitative real-time PCR is largely determined by the luminescent, e.g. fluorescent, signal to excitation background ratio. In order to obtain a high detection sensitivity, the background signal, pre-dominantly caused by part of the incident excitation radiation 26, e.g. excitation light, that reaches the detector 28, 34, should be suppressed as much as possible. As described in the embodiments above, suppression of the background signal can be advantageously obtained by the luminescence sensor 20 according to embodiments of the invention. Besides allowing for maximum detection sensitivity, this also increases the speed with which an analysis can be performed as the threshold value can be reduced.

In a further aspect, the present invention also provides a system controller 50 for use in a luminescence sensor 20 for controlling driving of at least one wire 12 of a wire grid 11 in a luminescence sensor 20 according to embodiments of the present invention. The system controller 50, which is schematically illustrated in Fig. 17, may comprise a control unit 51 for controlling a current source 31 for flowing current through at least one wire 12 of the wire grid 11.

The system controller 50 may include a computing device, e.g. microprocessor, for instance it may be a micro-controller. In particular, it may include a programmable controller, for instance a programmable digital logic device such as a Programmable Array Logic (PAL), a Programmable Logic Array, a Programmable Gate Array, especially a Field Programmable Gate Array (FPGA). The use of an FPGA allows subsequent programming of the microfluidic system, e.g. by downloading the required settings of the FPGA. The system controller 50 may be operated in accordance with settable parameters, such as driving parameters, for example temperature and timing parameters.

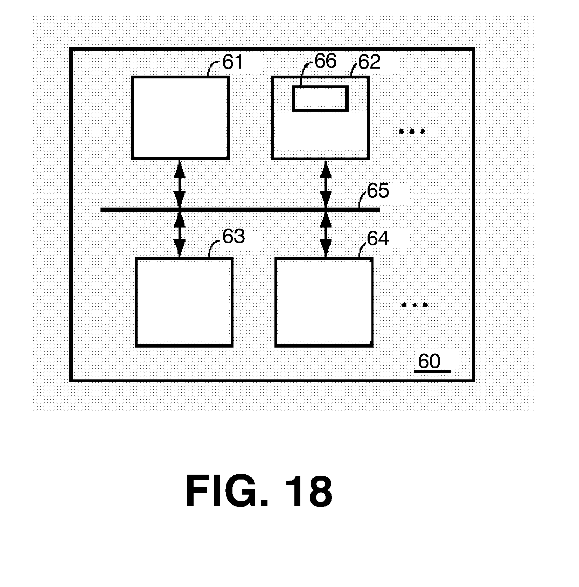

The methods described above according to embodiments of the present invention may be implemented in a processing system 60 such as shown in Fig. 18. Fig. 18 shows one configuration of processing system 60 that includes at least one programmable processor 61 coupled to a memory subsystem 62 that includes at least one form of memory, e.g., RAM, ROM, and so forth. It is to be noted that the processor 61 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 63 that has at least one disk drive and/or CD-ROM drive and/or DVD drive. In some implementations, a display system, a keyboard, and a pointing device may be included as part of a user interface subsystem 64 to provide for a user to manually input information, such as parameter values. Ports for inputting and outputting data, e.g. desired or obtained flow rate, also may be included. More elements such as network connections, interfaces to various devices, and so forth, may be included, but are not illustrated in Fig. 18. The various elements of the processing system 60 may be coupled in various ways, including via a bus subsystem 65 shown in Fig. 18 for simplicity as a single bus, but will be understood to those in the art to include a system of at least one bus. The memory of the memory subsystem 62 may at some time hold part or all (in either case shown as 66) of a set of instructions that when executed on the processing system 60 implement the steps of the method embodiments described herein.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A luminescence sensor (20) comprising at least one optical polarization-based filter formed by at least a first conductive grating (11), the at least first conductive grating (11) comprising a plurality of wires (12), the sensor (20) being for use with a temperature control device,
wherein at least one of the wires (12) of the at least first conductive grating (11) is adapted for use with the temperature control device.

2. A luminescence sensor (20) according to claim 1, furthermore comprising at least a second optical polarization-based filter formed by at least a second conductive grating (33).

3. A luminescence sensor (20) according to claim 2, wherein the first conductive grating (11) has a first type of polarization transmission and the second conductive grating (33) has a second type of polarization transmission, the first and second type of polarization transmission being different from each other.

4. A luminescence sensor (20) according to any of claims 2 or 3, the second conductive grating (33) comprising a plurality of wires (12), wherein at least one wire (12) of the second conductive grating (33) is adapted for functioning as a temperature control electrode.

5. A luminescence sensor (20) according to any of the previous claims, the luminescence sensor (20) comprising a reaction chamber (22) having a first side formed by a surface of a substrate (21),
wherein at least one conductive grating (11, 33) is formed on the first side of the reaction chamber (22).

6. A luminescence sensor (20) according to any of the previous claims, the luminescence sensor (20) comprising a reaction chamber (22) having a second side formed by a lid (23) located spaced from a substrate (21) and substantially parallel to the substrate (21),
wherein at least one conductive grating (11, 33) is formed on the second side of the reaction chamber (22).

7. A luminescence sensor (20) according to any of the previous claims, wherein the luminescence sensor (20) furthermore comprises a detector (28) for detecting luminescent radiation (27).

8. A luminescence sensor (20) according to claim 7, wherein the luminescent radiation (27) is generated by luminophores (25) present in a reaction chamber (22) of the luminescence sensor (20) upon irradiation with excitation radiation (26).

9. A luminescence sensor (20) according to claim 7 or 8, wherein the detector (28) is external to the luminescence sensor (20).

10. A luminescence sensor (20) according to claim 9, wherein the detector (28) is located at that side of the luminescence sensor (20) where excitation radiation enters the luminescence sensor (20).

11. A luminescence sensor (20) according to claim 9, wherein the detector (28) is located at a first side of the luminescence sensor (20) and excitation radiation enters the luminescence sensor (20) at a second side thereof, the first and second side being opposite to each other with respect to the reaction chamber (22).

12. A luminescence sensor (20) according to any of the previous claims, wherein the luminescence sensor (20) furthermore comprises driving means for driving the at least one wire (12) of the at least one conductive grating (11, 33) which is adapted for functioning with the temperature control device.

13. A luminescence sensor (20) according to any of the previous claims, wherein the at least one wire is part of a heater.

14. A luminescence sensor (20) according to any of the previous claims, the luminescence sensor (20) comprising a plurality of first conductive gratings (11), wherein the plurality of first conductive gratings (11) are logically arranged in rows and columns.

15. A luminescence sensor (20) according to claim 14, wherein the rows and columns are arranged in a matrix which forms a thermal processing array (40).

16. A luminescence sensor (20) according to claim 14, wherein the conductive grating (11, 33) is a wire grid.

17. A luminescence sensor (20) according to any of the previous claims, furthermore comprising active switching elements, preferably using large area electronics technologies.

18. A luminescence sensor (20) according to any of the previous claims, wherein the luminescence sensor (20) is a luminescence biosensor.

19. A method for manufacturing a luminescence sensor (20) for the detection of luminescence radiation (27) generated by at least one luminophore (25) and for use with a temperature control device, the method comprising:
- providing at least a first conductive grating (11) as at least one optical polarization-based filter, the conductive grating (11) comprising a plurality of wires (12),
- providing at least one of the wires (12) of the at least first conductive grating (11) for use with the temperature control device.

20. A method according to claim 19, furthermore comprising providing at least a second optical polarization-based filter by providing at least a second conductive grating (32).

21. A method according to claim 19, wherein providing at least a first conductive grating (11) is performed by providing a conductive grating (11) showing a first type of polarization transmission, and wherein providing at least a second conductive grating (32) is performed by providing a conductive grating (32) showing a second type of polarization transmission, the first and second type of polarization transmission being different from each other.

22. A method for detecting luminescence radiation (27) emitted by luminophores (25) in a sample fluid while simultaneously heating the sample fluid, the method comprising:
- irradiating the luminophores (25) with excitation radiation (26),
- using at least one optical polarization-based filter formed by at least a first conductive grating (11) for selectively transmitting luminescence radiation (27) of a particular type, the first conductive grating (11) comprising a plurality of wires (12), and driving the at least one wire (12) of the at least first conductive grating (11) for at least locally heating the sample fluid, and
- detecting luminescence radiation (27).

23. A method according to claim 22, all wires (12) of the conductive grating (11) being driven, wherein driving of the wires (12) is performed by flowing current through the wires (12).

24. A method according to claim 22, all wires (12) of the conductive grating (11) being drivable, wherein the wires are driven in segments one after the other.

25. A method according to any of claims 23 to24, furthermore comprising determining a change in temperature of the sample fluid by:
- measuring a voltage over the at least one wire (12) of the conductive grating (11),
- from the current sent through the at least one wire (12) and the voltage measured over the at least one wire (12) determining a change in resistivity of the at least one wire (12), and
- from the change in resistivity of the at least one wire (12) determining a change in temperature of the sample fluid.

26. A method for detecting luminescence radiation (27) emitted by luminophores (25) in a sample fluid while simultaneously monitoring a change in temperature of the sample fluid, the method comprising:
- irradiating the luminophores (25) with excitation radiation (26),
- determining a change in resistivity of at least one wire (12) of at least a first conductive grating (11) of an optical polarization-based filter,
- from the change in resistivity determining the change in temperature of the sample fluid, and
- detecting the luminescence radiation (27).

27. A method according to claim 26, the conductive grating (11) comprising a plurality of wires (12), all wires (12) of the conductive grating (11) being driven, wherein driving of the wires (12) is performed by sending current through the wires (12).

28. A method according to claim 26, all wires (12) of the conductive grating (11) being driven, wherein the wires are driven in segments one after the other.

29. A controller (50) for controlled driving of at least one wire (12) of a conductive grating (11) in a luminescence sensor (20), the controller comprising:
- a control unit (51) for controlling at least one current source (31 a, 31 b) for flowing of a current through at least one wire (12) of the conductive grating (11).

30. A computer program product for performing, when executed on a computing means, a method as in any of claims 22-28.

31. A machine readable data storage device for storing the computer program product of claim 30.

32. Transmission of the computer program product of claim 30 over a local or wide area telecommunications network.
